# EUROPEAN PATENT SPECIFICATION

(11) **EP 2 994 874 B1**
(45) Date of publication and mention of the grant of the patent: **07.04.2021**
(21) Application number: 14794450.8
(22) Date of filing: 07.05.2014
(51) Int. Cl.: G06Q 50/10, H04W 4/20, G06Q 50/00, H04W 4/02, G06F 3/048, G06F 3/0481, G06K 9/00, H04L 29/08, G06F 16/9537, G06F 40/134, H04W 4/21, H04L 12/58

(54) **SYSTEM AND METHOD FOR PROVIDING CONTENT TO AN APPARATUS BASED ON LOCATION OF THE APPARATUS**
SYSTEM UND VERFAHREN ZUR BEREITSTELLUNG VON INHALTEN FÜR EINE VORRICHTUNG AUF BASIS DER POSITION DER VORRICHTUNG
SYSTÈME ET PROCÉDÉ DESTINÉS À FOURNIR DU CONTENU À UN APPAREIL EN FONCTION DE L'EMPLACEMENT DE L'APPAREIL

(30) Priority: 07.05.2013 KR 20130051499; 12.07.2013 KR 20130082469
(43) Date of publication of application: 16.03.2016
(73) Proprietor: Samsung Electronics Co., Ltd., Gyeonggi-do 16677 (KR)
(72) Inventor: RYU, Jong-hyun, Daejeon 302-816 (KR); PARK, Yong-gook, Yongin-si Gyeonggi-do 446-581 (KR); LEE, Jang-woo, Seoul 134-767 (KR); LEE, Jae-young, Hwaseong-si Gyeonggi-do 445-792 (KR)
(74) Representative: HGF
(86) International application number: PCT/KR2014/004011
(87) International publication number: WO 2014/182043

(56) References cited:
- WO-A2-2009/089308
- US-A1- 2011 142 016
- US-A1- 2011 142 016
- US-A1- 2011 173 337
- US-A1- 2012 078 882
- US-A1- 2012 109 836
- US-A1- 2012 272 287
- US-A1- 2013 013 683
- US-A1- 2013 013 683
- US-B2- 8 386 619
- US-B2- 8 386 619

## Description

### Technical Field

Apparatuses and methods consistent with exemplary embodiments relate to a system and a method for sharing a target share content between apparatuses based on locations of the apparatuses.

### Description of the Related Art

Due to the developments in network and multimedia technologies, users may share various types of content (or target share content) in various network environments. However, due to a rapid increase in the types and number of network environments and target share content, it may be difficult for the users to efficiently select and share user-desired content. Thus, there is a demand for a technique for providing target share content to the users, in consideration of environments of the users.
US 2011/142016 discloses methods, program products, and systems for ad hoc networking based on content and location. A user of a mobile device can identify another user using another mobile device who is close by, if both users have requested to participate in networking, and common interests and experiences of two or more users located close to each other can be identified from content, including automatically created usage data of the mobile device.
US 2012/272287 discloses a social media device to receive social interaction data including an identity of neighboring mobile devices that have been within a physical proximity of an object mobile device. The social media device hosts a social network service and provides content to a user associated with the object mobile device according to the identity of more neighboring mobile devices.
US 8386619 discloses systems and methods for the sharing of content among user devices of a device group.

### Disclosure of Invention

### Solution to Problem

One or more exemplary embodiments provide a target share content providing system and a method of providing, to a first device, content associated with a user of the first device and a user of a second device, when the second device is located near the first device.

One or more exemplary embodiments also provide a target share content providing system and a method of recommending content that is associated with a user of a second device among a plurality of user contents of a first device, when the second device is located near the first device.

### Brief Description of Drawings

The above and/or other aspects will become apparent and more readily appreciated from the following description of exemplary embodiments, taken in conjunction with the accompanying drawings, in which:
FIG. 1 illustrates a target share content providing system according to an exemplary embodiment;
FIG. 2 illustrates an example in which content that is associated with a first user of a first device and a second user of a second device is provided to the first device according to an exemplary embodiment;
FIG. 3 illustrates an example in which content that is associated with a first user of a first device and a second user of a second device is provided to a third device according to an exemplary embodiment;
FIG. 4 is a flowchart of a method of providing content that is associated with a first user of a first device and a second user of a second device according to an exemplary embodiment;
FIG. 5 is a flowchart of a method of searching for a second device located near a first device, based on a global positioning system (GPS) value according to an exemplary embodiment;
FIG. 6 is a flowchart of a method of searching for a second device located near a first device, based on an access point (AP) address according to another exemplary embodiment;
FIG. 7 is a flowchart of a method of searching for a second device located near a first device when the first device and the second device are linked via pairing according to another exemplary embodiment;
FIG. 8 is a flowchart of a method of determining whether a second device is located near a first device, based on a location value of a location information providing apparatus according to an exemplary embodiment;
FIG. 9 is a flowchart of a method of determining whether a second user is associated with a first user by using social networking service (SNS) service identifiers (IDs) according to an exemplary embodiment;
FIG. 10 is a flowchart of a method of determining whether a second user is associated with a first user by using an address book according to an exemplary embodiment;
FIG. 11 is a flowchart of a method of determining whether a second user is associated with a first user, based on an activity and content of each user according to an exemplary embodiment;
FIG. 12 is a flowchart of a method of notifying a content providing server that the first device and a second device are related to each other according to an exemplary embodiment;
FIG. 13 is a flowchart of a method of searching for content to be shared between a first device and a second device according to an exemplary embodiment;
FIG. 14 is a flowchart of a method of searching for a still image that is associated with a first user and a second user among still images stored in an SNS server according to an exemplary embodiment;
FIG. 15 is a flowchart of a method of filtering still images stored in an SNS server by using face images of first and second users that are received from a first device and a second device, respectively, according to an exemplary embodiment;
FIG. 16 is a flowchart of a method of searching for a video that is associated with a first user and a second user among videos stored in an SNS server, according to an exemplary embodiment;
FIG. 17 is a flowchart of a method of obtaining log information about communication between a first device and a second device and obtaining a content share history between the first device and the second device according to an exemplary embodiment;
FIG. 18 is a flowchart of a method of searching for content that is associated with a first user and a second user and providing the found content to a content providing server, according to an exemplary embodiment;
FIG. 19 is a flowchart of a method of searching for data that is exchanged between a first device and a second device via an SNS serve according to an exemplary embodiment;
FIG. 20 is a flowchart of a method of generating an object according to an exemplary embodiment;
FIG. 21 is a flowchart of a method of providing an object according to an exemplary embodiment;
FIG. 22 is a flowchart of a method of providing an object to at least one of a first device and a second device according to an exemplary embodiment;
FIG. 23 is a flowchart of a method of providing an object to a third device according to an exemplary embodiment;
FIG. 24 is a flowchart of a method of recommending, to a second device, content that is associated with a user of the second device among a plurality of contents of a user of a first device according to an exemplary embodiment;
FIG. 25 is a flowchart of a method of recommending, to a first device and a second device, content that is associated with a user of the first device and a user of the second device among a plurality of contents of the user of the first device and a plurality of contents of the user of the second device according to an exemplary embodiment;
FIG. 26 is a flowchart of a method of rearranging a plurality of contents in a first device, wherein the plurality of contents are associated with a user of a second device among a plurality of contents of a user of the first device according to an exemplary embodiment;
FIG. 27 is a flowchart of a method of receiving, from a content providing server, content that is associated with a user of a second device among a plurality of contents of a user of a first device, according to an exemplary embodiment;
FIG. 28 illustrates an example in which a content providing server provides an object to a first device and a second device according to an exemplary embodiment;
FIG. 29 illustrates an example in which a content providing server provides an object only to a first device according to an exemplary embodiment;
FIG. 30 illustrates an example in which a content providing server provides an object to a third device according to an exemplary embodiment;
FIG. 31 illustrates an example in which found still images are filtered according to an exemplary embodiment
FIGS. 32A and 32B illustrate examples of an object according to an exemplary embodiment;
FIGS. 33A to 33D illustrate an example in which an object displayed on a first device is synchronized with an object displayed on a second device according to an exemplary embodiment;
FIGS. 34A to 34C illustrate an example in which still images that are associated with a first user and a second user are displayed in a slide show manner on a first device according to an exemplary embodiment;
FIGS. 35A and 35B illustrate examples in which still images that are associated with a first user and a second user are rearranged on a gallery screen of a first device according to an exemplary embodiment;
FIG. 36 is a block diagram of a content providing server according to an exemplary embodiment;
FIG. 37 is a block diagram of a database (DB) according to an exemplary embodiment; and
FIG. 38 is a block diagram of a first device according to an exemplary embodiment.

### Best Mode for Carrying out the Invention

According to an aspect of an exemplary embodiment, there is provided an apparatus for receiving content associated with a second user of an external device, the apparatus including a communicator configured to, when the external device is located within a predetermined distance from the apparatus, receive identification (ID) information of the external device from the external device and transmit the received ID information of the external device to a content providing server; and a controller configured to request the content providing server for the content associated with the second user from among content of a first user of the apparatus stored in at least one from among another apparatus of the first user, the content providing server, and a social networking service (SNS) server, wherein the communicator receives the content associated with the second user from the content providing server in response to the request.

The communicator may receive, when the apparatus is located within a near-field communication range of the external device, ID information of the external device from the external device.

The communicator may receive the content associated with the second user from among the content of the first user of the apparatus, from the content providing server.

The controller may, based on whether the external device is associated with the apparatus, filter the external device, and provides ID information of the filtered external device to the content providing server through the communicator.

The controller may provide an SNS service ID of the first user to the SNS server through the communicator, and may filter the external device based on relationship information of the first user, the relationship information being received from the SNS server.

The relationship information may include a social graph associated with a relationship between the first user and other users.

The controller may provide an SNS ID of the first user and an SNS service ID of the second user to the content providing server, and based on the SNS ID of the first user and the SNS service ID of the second user, the content providing server may determine whether the external device is associated with the apparatus.

The controller may receive an object for accessing the content associated with the second user from the content providing server through the communicator, and the object may include link information for downloading the content associated with the second user of the external device.

The object may include a user interface including at least one from among an icon, a text, an image, the link information, and information about functions of the object.

The content of the first user may include at least one from among content stored in the content providing server, content stored in the another apparatus of the first user, and content uploaded by the first user to the SNS server.

The content associated with the second user may include, from among pictures of the first user, a picture including a face of the first user and a face of the second user.

The received content associated with the second user may be filtered by the content providing server.

From among the content of the first user, the content associated with the second user may be provided to the external device.

A value of the predetermined distance may vary according to at least one from among a relation level between the first user and the second user and a type of the content associated with the second user.

The controller may control the communicator to transmit the content associated with the second user to a third apparatus, the third apparatus being located within a second predetermined distance from at least one from among the first apparatus and the second apparatus.

The third apparatus may receive an object for accessing the content associated with the second user from the content providing server.

The controller may control the communicator to transmit the content associated with the second user of the external device to a third apparatus of a third user, the third user being determined by the SNS server as having a relationship with the at least one from among the first user and the second user.

According to an aspect of another exemplary embodiment, there is provided a method of receiving content in an apparatus, the content being associated with a second user of an external device, the method including: when the external device is located within a predetermined distance from the apparatus, receiving ID information of the external device from the external device; and requesting, based on the received ID information of the external device, a content providing server for the content associated with the second user from among content of a first user of the apparatus stored in at least one from among another apparatus of the first user, the content providing server, and a social networking service (SNS) server; and receiving the content associated with the second user from the content providing server in response to the request.

The receiving ID information of the external device may include receiving, when the apparatus is located within a near-field communication range of the external device, ID information of the external device from the external device.

The method may further include receiving the content associated with the second user from among the content of the first user, from the content providing server.

The method may further include filtering the external device based on whether the external device is associated with the apparatus, and transmitting ID information of the filtered external device to the content providing server.

The method may further include receiving an object for accessing the content associated with the second user from the content providing server, and the object may include link information for downloading the content associated with the second user.

The content of the first user may include at least one from among content stored in the content providing server, content stored in the another apparatus of the first user, and content uploaded by the first user to the SNS server.

A value of the predetermined distance may vary according to at least one from among a relation level between the first user and the second user and a type of the content associated with the second user.

The method may further include transmitting the content associated with the second user to a third apparatus, the third apparatus being located within a second predetermined distance from at least one from among the first apparatus and the second apparatus.

The method may further include receiving, by the third apparatus, an object for accessing the content associated with the second user from the content providing server.

The method may further include transmitting the content associated with the second user to a third apparatus of a third user, the third user being determined by the SNS server as having a relationship with the at least one from among the first user and the second user.

According to an aspect of still another exemplary embodiment, there is provided a non-transitory computer-readable recording medium having recorded thereon a program which, when executed by a computer, performs the above method.

According to an aspect of still another exemplary embodiment, there is provided a method of providing content to an apparatus in a server, the method including, when a second apparatus is located within a predetermined distance from a first apparatus, receiving ID information of the second apparatus from the first apparatus; searching for content associated with a second user of the second apparatus from among content of a first user of the first apparatus stored in at least one from among another apparatus of the first user, a content providing server, and an SNS server; and providing the first apparatus with the searched content associated with the second user.

According to an aspect of still another exemplary embodiment, there is provided a method of recommending content associated with a second user of a second apparatus in an apparatus, the method including, when the first apparatus is located within a near-field communication range of the second apparatus, providing a communication channel between the first apparatus and the second apparatus; receiving at least one from among ID information of the second apparatus and ID information of the second user from the second apparatus; and searching for the content associated with the second user, from among content of a first user of the first apparatus stored in at least one from among another apparatus of the first user, a content providing server, and an SNS server, and recommending the searched content to the second apparatus.

According to an aspect of still another exemplary embodiment, there is provided a non-transitory computer-readable recording medium having recorded thereon a program which, when executed by a computer, performs the above method.

According to an aspect of still another exemplary embodiment, there is provided a user terminal including: a communicator configured to transmit location information of the user terminal to a content providing server communicatively coupled to the user terminal; a controller configured to receive, from the content providing server, information about at least one second user terminal and content associated with the user terminal and the at least one second user terminal, the at least one second user terminal being determined to be located within a predetermined distance from the user terminal based on the location information of the user terminal; and a user input receiver configured to receive a user command, wherein the controller controls the user terminal to share the content with the at least one second user terminal in response to the user command.

The location information may include at least one from among a global positioning system (GPS) value of the user terminal, an identification (ID) value of the user terminal, and ID value of an access point (AP) connected with the user terminal.

The content providing server may prestore a list of user terminals related to the user terminal and determine the at least one second user terminal based on the prestored list.

The content providing server may be connected to a networking server and, based on relation information of the user terminal provided from the networking server, the content providing server may determine the at least one second user terminal.

The at least one second user terminal may include a plurality of second user terminals, and in response to a user command for selecting the at least one second user terminal among the plurality of second user terminals, the controller may control the user terminal to share the content with the selected at least one second user terminal.

### Mode for the Invention

Hereinafter, embodiments will be described more fully with reference to the accompanying drawings. However, the embodiments may be embodied in many different forms and should not be construed as being limited to the embodiments set forth herein; rather, these embodiments are provided so that this disclosure will be thorough and complete, and will fully convey the concept of the embodiments to those of ordinary skill in the art. In the following description, well-known functions or constructions will not be described in detail so as not to obscure the embodiments with unnecessary detail. Also, throughout the specification, like reference numerals in the drawings denote like elements.

Throughout the specification, it will also be understood that when an element is referred to as being "connected to" another element, it can be directly connected to the other element, or electrically connected to the other element while intervening elements may also be present.

Throughout the specification, an object for using a service may include a user interface for using a related content providing service that is provided by a content providing server. Also, the object for using the service may include a user interface for using related content that is provided by at least one from among the content providing server, another server, and a content provider. The object for using the service may include a user interface including an icon, a text, an image, link information, and information about a function of the object.

A device may receive an object from a content providing server and may use a service of the content providing server by using the object. By using the object, the device may obtain and process an application program and a data source in the device and may obtain and process related content from at least one from among the content providing server, another server, and a content provider. Also, the object may be a user interface in the form of packaged services that are provided based on context information of a user (or the device).

The object may not be installed in the device or may not be executed by the device but may be interpreted by a host program and thus may be displayed on a screen of the device and may be used by the user. The object may be a gadget but is not limited thereto. Also, the object may not be installed in the device or may not be executed by the device but may be displayed on a separate window on the screen of the device by the host program of the device.

Throughout the specification, the fact that a first device and a second device are adjacent to each other may mean that the first device is located within a communication range of the second device or the second device is located within a communication range of the first device.

Throughout the specification, the fact that the first device and the second device are related to each other may mean that a user of the first device and a user of the second device are related to each other.

Also, throughout the specification, content of the user of the device may include at least one from among content stored in the device, content stored in another device of the user of the device, content stored by the user in a server, and content for which the user of the device has a usage right.

Throughout the specification, the user of the first device is referred as a first user, and the user of the second device is referred as a second user.

Throughout the specification, content of a user may include, but is not limited to, content stored in an apparatus or a server by the user, content owned by the user, content owned by a group including the user, and content owned by a service provider that provides a service to which the user subscribes.

Reference will now be made in detail to certain embodiments, examples of which are illustrated in the accompanying drawings. Expressions such as "at least one of," when preceding a list of elements, modify the entire list of elements and do not modify the individual elements of the list.

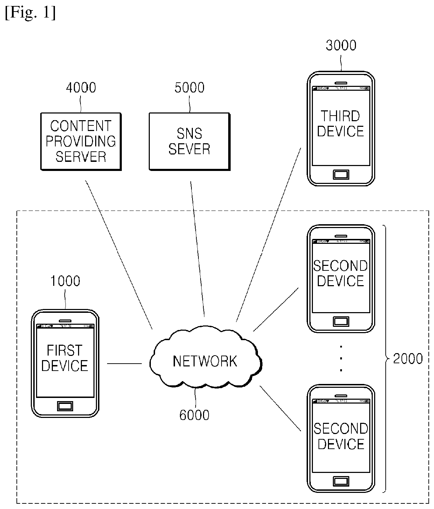

FIG. 1 illustrates a target share content providing system according to an exemplary embodiment.

As illustrated in FIG. 1, a target share content providing system according to an exemplary embodiment may include at least one first device 1000, one or more second devices 2000, a third device 3000, a content providing server 4000, a social networking service (SNS) server 5000, and a network 6000.

The first device 1000 may share content with the one or more second devices 2000 that are located near the first device 1000. Information about a location of the first device 1000 and information about a location of the second device 2000 may be provided to the content providing server 4000. The first device 1000 may be provided, by the content providing server 4000, with related content that is associated with a first user of the first device 1000 and a second user of the second device 2000.

Each of the first device 1000 and the second device 2000 may be, but is not limited to, a smartphone, a mobile phone, a personal digital assistant (PDA), a laptop computer, a smart television (TV), a media player, a global positioning system (GPS) device, or a mobile or non-mobile computing device. Also, each of the first device 1000 and the second device 2000 may be wearable by a user. For example, each of the first device 1000 and the second device 2000 may be, but is not limited to, a watch, glasses, a hair band, or a ring that has a communication function and a data processing function. The first device 1000 and the second device 2000 may include all types of devices capable of exchanging content via the network 6000 and displaying the content.

In a case where is the first device 1000 includes a plurality of the first devices 1000, a portion of the first devices 1000 may receive related content from the content providing server 4000, and another portion of the first devices 1000 may output notice information informing that the related content has been received. In this case, the notice information may be transmitted from the content providing server 4000 to the another portion of the first devices 1000 to notify that the related content has been provided to the portion of the first devices 1000. For example, in a case where the first devices 1000 include a smartphone and a watch of the first user, the smartphone may receive the related content from the content providing server 4000, and the watch may output the notice information informing that the related content has been received.

The content providing server 4000 may search for the second device 2000 located near the first device 1000 and may provide the related content to at least one of the first device 1000 and the second device 2000. The related content means content that is associated with the first user of the first device 1000 and the second user of the second device 2000. For example, the related content may include a still image, a video, music, a document, a message, or the like.

The content providing server 4000 may generate an object for using the related content and may provide the generated object to at least one of the first device 1000 and the second device 2000.

The content providing server 4000 may provide the related content to the third device 3000. The third device 3000 may be, but is not limited to, a common-use device located near the first device 1000 and the second device 2000. The common-use device may be a device of which use authority is granted to a plurality of users. In an alternative embodiment, the third device 3000 may not be a device located near the first device 1000 and the second device 2000. In this case, the third device 3000 may be a device of a user who knows both the first user and the second user. Also, the third device 3000 may be, but is not limited to, a smartphone, a mobile phone, a PDA, a laptop computer, a smart TV, a media player, a GPS device, or a mobile or non-mobile computing device. The third device 3000 may include all types of devices capable of exchanging content via the network 6000 and displaying the content.

The SNS server 5000 provides content of the first user and content of the second user to the content providing server 4000. Also, the SNS server 5000 may provide relation information with respect to the first user to the content providing server 4000, so that the content providing server 4000 may determine whether the second user is related to the first user. The relation information with respect to the first user may be information about a user who is related to the first user among users who use an SNS service. The relation information with respect to the first user may indicate, from among the users of the SNS service, users who are friends, families, and co-workers of the first user. For example, the relation information with respect to the first user may be a social graph in a form of a tree structure which connects the first user and other users that are related to the first user.

When the first device 1000 is located near a predetermined common-use device (e.g., the third device 3000), preset content may be provided to the first device 1000. In this case, the preset content may be content associated with content that is co-used by the first device 1000 and the predetermined common-use device, content associated with content that is used by the first device 1000, etc. The predetermined common-use device may be a head unit in a vehicle, a TV, a PC, an audio system, etc. located in a living room of a house, or the like, but exemplary embodiments are not limited thereto. Also, in this case, a relation between the first device 1000 and the predetermined common-use device may be determined by the first device 1000, based on a previous connection history between the first device 1000 and the predetermined common-use device. When it is determined that the first device 1000 and the predetermined common-use device are related to each other, the preset content may be provided to the first device 1000.

Alternatively, when the first device 1000 is located in a predetermined place, preset content may be provided to the first device 1000. In this case, the preset content may be content associated with content that is used by the first device 1000 in the predetermined place. The predetermined place may be, but is not limited to, a school, a company, a museum, or a movie theater.

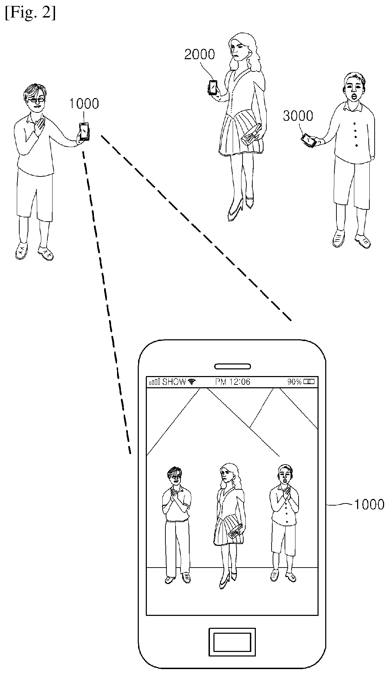

FIG. 2 illustrates an example in which content that is associated with the first user of the first device 1000 and the second user of the second device 2000 is provided to the first device 1000, according to an exemplary embodiment.

Referring to FIG. 2, two second devices 2000 may be located near the first device 1000, and the first user and second users of the two second devices 2000 may be friends to one another. In this case, a still image of the first user and the second users, which was previously captured, may be displayed on the first device 1000. To this end, the content providing server 4000 may recognize locations of the first and second devices 1000 and 2000 and may determine whether the first user and the second users know each other based on the recognized locations of the first and second devices 1000 and 2000. Also, the content providing server 4000 may collect still images of the first user and still images of the second users and may provide the still image that is associated with the first user and the second users from among the collected still images to the first device 1000.

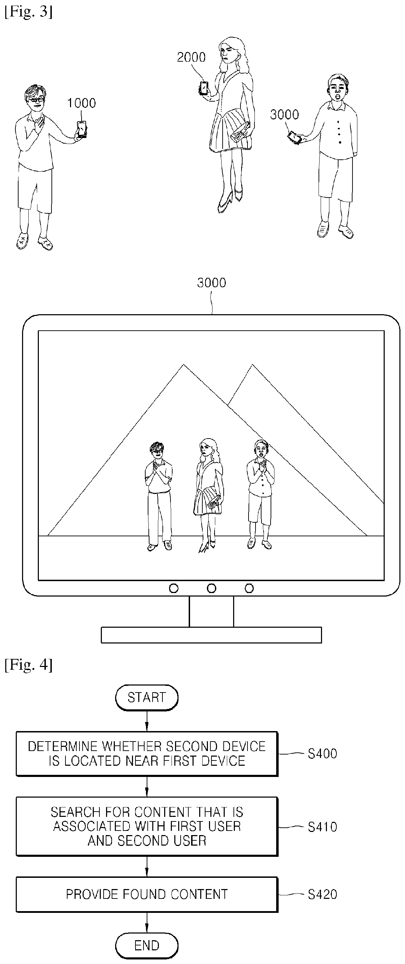

FIG. 3 illustrates an example in which content that is associated with the first user of the first device 1000 and the second user of the second device 2000 is provided to the third device 3000, according to an exemplary embodiment.

Referring to FIG. 3, two second devices 2000 may be located near the first device 1000, and the first user and the second users of the two second devices 2000 may be friends to one another. Also, the third device 3000 may be located near the first device 1000 and the two second devices 2000. The third device 3000 may be a common-use TV that is located near the first device 1000 and the two second devices 2000. In this case, a still image of the first user and the second users, which was previously captured, may be displayed on the third device 3000. To this end, the content providing server 4000 may recognize locations of the first and second devices 1000 and 2000. Also, the content providing server 4000 may collect still images of the first user and still images of the second users and may provide the still image that is associated with the first user and the second users from among the collected still images to the third device 3000.

FIG. 4 is a flowchart of a method of providing content that is associated with the first user of the first device 1000 and the second user of the second device 2000, according to an exemplary embodiment.

In operation S400, the content providing server 4000 determines whether the second device 2000 is located near the first device 1000. The content providing server 4000 may receive a location value of the first device 1000 from the first device 1000, and a location value of the second device 2000 from the second device 2000. Also, the content providing server 4000 may compare the location values of the first and second devices 1000 and 2000 and thus may determine whether the second device 2000 is located near the first device 1000. Also, the content providing server 4000 may search for the second device 2000 that is located near the first device 1000.

The content providing server 4000 may receive an identifier (ID) value of an access point (AP) connected with the first device 1000 from the first device 1000, and may receive an ID value of an AP connected with the second device 2000 from the second device 2000. The ID value of the AP may be an AP address. The content providing server 4000 may compare the ID values of the APs connected with the first and second devices 1000 and 2000 and thus may determine whether the second device 2000 is located near the first device 1000.

Alternatively, the content providing server 4000 may receive an ID value of a location information providing apparatus (not shown) located near the first device 1000 and may receive an ID value of a location information providing apparatus (not shown) located near the second device 2000. The content providing server 4000 may compare the ID values of the location information providing apparatuses located near the first and second devices 1000 and 2000 and thus may determine whether the second device 2000 is located near the first device 1000.

The first device 1000 may perform short-distance communication with the second device 2000, and may notify the content providing server 4000 that the second device 2000 is located near the first device 1000. In this case, the content providing server 4000 may determine that the second device 2000 is located near the first device 1000, based on the notification from the first device 1000.

The content providing server 4000 may further determine whether the first user of the first device 1000 and the second user of the second device 2000 are related to each other. The content providing server 4000 may determine whether the first user and the second user are related to each other by using, for example, an SNS service ID of the first user and an SNS service ID of the second user. Alternatively, the content providing server 4000 may determine whether the first user and the second user are related to each other by using an address book stored in the first device 1000 and an address book stored in the second device 2000. Alternatively, the content providing server 4000 may determine whether the first user and the second user are related to each other by comparing content stored in the first device 1000 or content uploaded to the content providing server 4000 or the SNS server 5000 by the first device 1000 with content stored in the second device 2000 or content uploaded to the content providing server 4000 or the SNS server 5000 by the second device 2000.

When the first device 1000 and the second device 2000 are connected via short-distance communication, the first device 1000 may determine whether the first user and the second user are related to each other, and thus may notify the content providing server 4000 that the first user and the second user are related to each other.

In operation S410, the content providing server 4000 searches for content that is associated with the first user of the first device 1000 and the second user of the second device 2000. For example, the content may include at least one of a still image, a video, music, a document, and a message. When the content is a still image, the content that is associated with the first user and the second user may be a picture in which images the first user and the second user are together. When the content is a video, the content that is associated with the first user and the second user may be a moving picture in which images of the first user and the second user are together or a moving picture watched by the first user and the second user together. When the content is music, the content that is associated with the first user and the second user may be music listened to by the first user and the second user together. When the content is a document, the content that is associated with the first user and the second user may be a document co-produced by the first user and the second user. When the content is a message, the content that is associated with the first user and the second user may be a message exchanged between the first user and the second user. However, types of the content that is associated with the first user and the second user are not limited thereto.

The content that is associated with the first user and the second user may be stored in at least one of the first device 1000, the second device 2000, the content providing server 4000, the SNS server 5000, another device of the first user, and another device of the second user.

The content providing server 4000 may search, from among a plurality of contents of the second user, for content which is associated with the first user. The content providing server 4000 may search the plurality of contents of the second user by using the ID value of the second device 2000 or the ID value of the second user (e.g., an ID of a service provided to the second device 2000 by the content providing server 4000, the SNS service ID of the second user, etc). Then, the content providing server 4000 may select, from among the plurality of contents of the second user, the content which is associated with the first user.

The content providing server 4000 may search, from among a plurality of contents of the first user, for content which is associated with the second user. The content providing server 4000 may search the plurality of contents of the first user by using the ID value of the first device 1000 or the ID value of the first user (e.g., an ID of a service to the first device 1000 provided by the content providing server 4000, the SNS service ID of the first user, etc). Then, the content providing server 4000 may select, from among the plurality of contents of the first user, the content which is associated with the second user.

In operation S420, the content providing server 4000 provides the found content to at least one of the first device 1000 and the second device 2000. The content providing server 4000 may provide the content, from among the plurality of contents of the first user, which is associated with the second user, to at least one of the first device 1000 and the second device 2000. The content providing server 4000 may provide the content, from among the plurality of contents of the second user, which is associated with the first user, to at least one of the first device 1000 and the second device 2000.

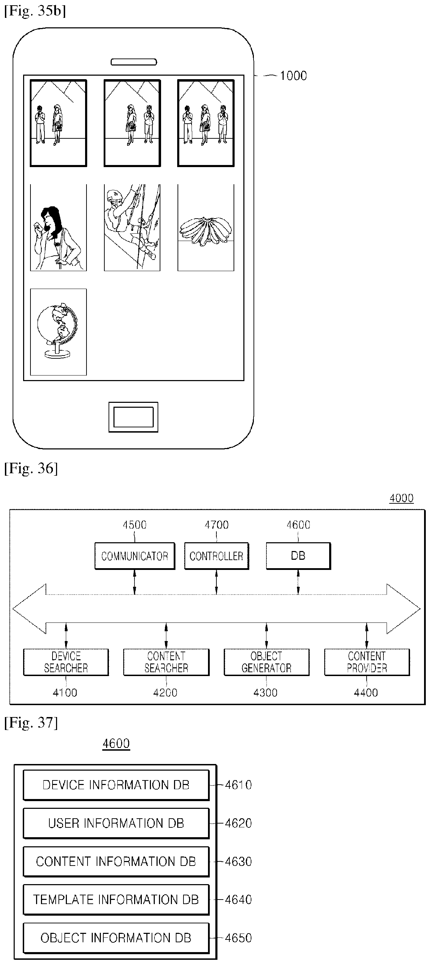

The content providing server 4000 may generate an object for using the found content. The content providing server 4000 may extract, from a database (DB) 4600 (refer to FIG. 36), a template used to generate the object according to the found content. Also, the content providing server 4000 may insert at least one of the found content and link information for downloading the found content into the template. The content providing server 4000 may insert, for example, a face image of the first user, a face image of the second user, and a reason for recommending the object into the template.

The content providing server 4000 may provide the object to at least one of the first device 1000 and the second device 2000. Also, the content providing server 4000 may provide the object to the third device 3000. In this case, the third device 3000 may be a common-use device that is located near the first device 1000 and the second device 2000. Alternatively, the third device 3000 may be a device that is not located near the first device 1000 and the second device 2000 but may be a device of an acquaintance of the first user and the second user.

The content providing server 4000 may provide the object to at least one of the first device 1000, the second device 2000, and the third device 3000.

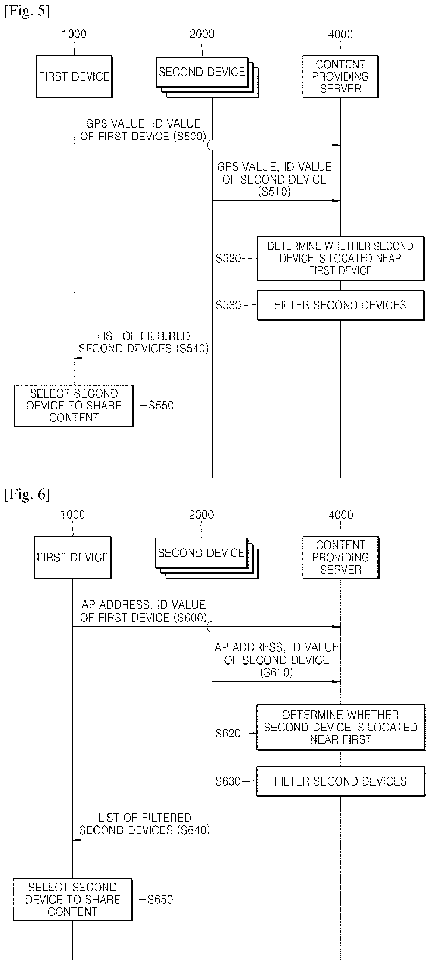

FIG. 5 is a flowchart of a method of searching for the second device 2000 located near the first device 1000, based on a GPS value, according to an exemplary embodiment.

In operation S500, the first device 1000 provides a GPS value indicating a location of the first device 1000 and the ID value of the first device 1000 to the content providing server 4000. The first device 1000 may receive waves from a plurality of GPS satellites (not shown) that orbit around the earth by using a GPS sensor (not shown) in the first device 1000 and may calculate a location value (i.e. the GPS value) of the first device 1000 by using travel times of the waves from the GPS satellites to the first device 1000. Also, the first device 1000 may provide the location value thereof to the content providing server 4000.

In operation S510, the second device 2000 provides a GPS value indicating a location of the second device 2000 and the ID value of the second device 2000 to the content providing server 4000. The second device 2000 may receive waves from a plurality of GPS satellites (not shown) that orbit around the earth by using a GPS sensor (not shown) in the second device 2000 and may calculate a location value (i.e. the GPS value) of the second device 2000 by using travel times of the waves from the GPS satellites to the second device 2000. Also, the second device 2000 may provide the location value thereof to the content providing server 4000.

The content providing server 4000 may receive the location value of the first device 1000 and the location value of the second device 2000 from the SNS server 5000. The first device 1000 may log in or check in to a service provided by the SNS server 5000 and may transmit the location value of the first device 1000 to the SNS server 5000. Also, the second device 2000 may log in or check in to the service provided by the SNS server 5000 and may transmit the location value of the second device 2000 to the SNS server 5000. In this case, the location values may include, but are not limited to, the GPS value of the first device 1000 and the GPS value of the second device 2000, and the ID value of an AP connected with the first device 1000 and the ID value of an AP connected with the second device 2000.

In operation S520, the content providing server 4000 determines whether the second device 2000 is located near the first device 1000. The content providing server 4000 may calculate a distance between the first device 1000 and the second device 2000 based on the location value of the first device 1000 and the location value of the second device 2000. When the distance between the first device 1000 and the second device 2000 is less than a predetermined value, the content providing server 4000 may determine that the second device 2000 is located near the first device 1000.

The predetermined value may be set and stored in the DB 4600 of the content providing server 4000. The predetermined value may be set to vary according to, for example, a relation level between the first user and the second user, a type of a target share service (i.e., a service to be shared), and a type of target share content (i.e., content to be shared). For example, the predetermined value may vary according to whether the first user and the second users are family or friends. For another example, the predetermined value may vary according to whether the type of the target share content is a video or a still image.

In operation S530, the content providing server 4000 filters the second device 2000. The content providing server 4000 may determine that a plurality of the second devices 2000 are located near the first device 1000, filter a portion of the plurality of the determined second devices 2000, and generate a list of the filtered second devices 2000. To this end, a list of devices related to the first device 1000 may be pre-stored in the content providing server 4000. The list of devices related to the first device 1000, which is used in the filtering operation, may be set to vary according to a location of the first device 1000. Additionally, the content providing server 4000 may filter the second devices 2000, in consideration of the location of the first device 1000, a schedule of the first user, a time, weather, etc.

In operation S540, the content providing server 4000 may provide the list of the filtered second devices 2000 to the first device 1000.

In operation S550, the first device 1000 selects the second device 2000 to share content with the first device 1000, from the list of the filtered second devices 2000. The first device 1000 may select the second device 2000 to share the content with the first device 1000 based on a user input, but exemplary embodiments are not limited thereto. The first device 1000 may select the second device 2000 to share the content with the first device 1000 according to a preset content sharing standard. The content sharing standard may be set to vary according to, for example, the location of the first device 1000.

In an alternative embodiment, operation S530 may be skipped, and in this case, in operation S540, the content providing server 4000 may provide a list of non-filtered second devices 2000 to the first device 1000.

FIG. 6 is a flowchart of a method of searching for the second device 2000 located near the first device 1000 based on an AP address, the method performed by the content providing server 4000, according to another exemplary embodiment.

In operation S600, the first device 1000 provides the ID value of an AP connected with the first device 1000 and the ID value of the first device 1000 to the content providing server 4000. The first device 1000 may receive the ID value of the AP connected with the first device 1000 from the corresponding AP and may provide the ID value of the AP to the content providing server 4000. The ID value of the AP may be an address of the AP, but exemplary embodiments are not limited thereto.

In operation S610, the second device 2000 provides the ID value of an AP connected with the second device 2000 and the ID value of the second device 2000 to the content providing server 4000. The second device 2000 may receive the ID value of the AP connected with the second device 2000 from the corresponding AP and may provide the ID value of the AP to the content providing server 4000.

In operation S620, the content providing server 4000 determines whether the second device 2000 is located near the first device 1000. The content providing server 4000 may compare the ID value of the AP received from the first device 1000 with the ID value of the AP received from the second device 2000 and thus may determine whether the second device 2000 is located near the first device 1000. For example, when the ID value of the AP received from the first device 1000 is equal to the ID value of the AP received from the second device 2000, the content providing server 4000 may determine that the second device 2000 is located near the first device 1000.

In operation S630, the content providing server 4000 filters the second device 2000. The content providing server 4000 may determine that a plurality of the second devices 2000 are located near the first device 1000, filter a portion of the plurality of the determined second devices 2000, and generate a list of the filtered second devices 2000. To this end, a list of devices related to the first device 1000 may be pre-stored in the content providing server 4000. The list of devices related to the first device 1000, which is used in the filtering operation, may be set to vary according to, for example, a location of the first device 1000. Additionally, the content providing server 4000 may filter the second devices 2000, in consideration of the location of the first device 1000, a schedule of the first user, a time, weather, etc.

In operation S640, the content providing server 4000 may provide the list of the filtered second devices 2000 to the first device 1000.

In operation S650, the first device 1000 selects the second device 2000 to share content with the first device 1000, from the list of the filtered second devices 2000. The first device 1000 may select the second device 2000 to share the content with the first device 1000 based on a user input, but exemplary embodiments are not limited thereto. The first device 1000 may select the second device 2000 to share the content with the first device 1000 according to a preset content sharing standard. The content sharing standard may be set to vary according to, for example, the location of the first device 1000.

In an alternative embodiment, operation S630 may be skipped, and in this case, in operation S640, the content providing server 4000 may provide a list of non-filtered second devices 2000 to the first device 1000.

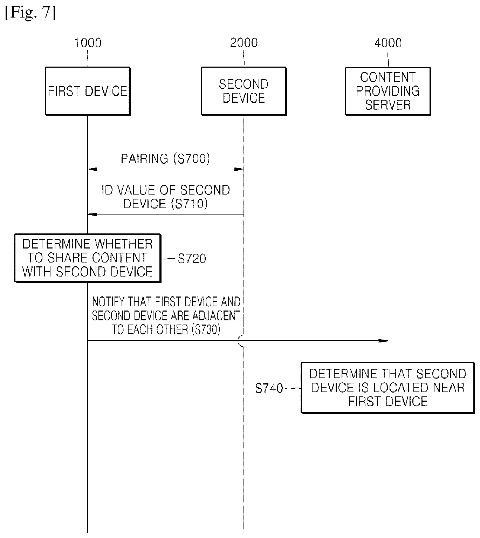

FIG. 7 is a flowchart of a method of searching for the second device 2000 located near the first device 1000, the method performed when the first device 1000 and the second device 2000 are linked via pairing, according to another exemplary embodiment.

In operation S700, the first device 1000 and the second device 2000 are linked via pairing. Since the first device 1000 is located within a communication range of the second device 2000 or the second device 2000 is located within a communication range of the first device 1000, the first device 1000 and the second device 2000 may be linked via pairing. The first device 1000 and the second device 2000 may be linked via pairing by using at least one of near field communication (NFC), radio frequency identification (RFID) communication, and Bluetooth communication, but exemplary embodiments are not limited thereto.

For example, when the first device 1000 and the second device 2000 are connected to the same AP, the first device 1000 and the second device 2000 may perform communication with each other.

In operation S710, the second device 2000 provides the ID value of the second device 2000 to the first device 1000. Since the first device 1000 and the second device 2000 are linked via pairing, the second device 2000 may provide the ID value of the second device 2000 to the first device 1000. The ID value of the second device 2000 may be, but is not limited to, a model name, a serial number, a phone number, etc. of the second device 2000.

In operation S720, the first device 1000 determines whether to share content with the second device 2000. When it is determined that the first device 1000 and the second device 2000 are related to each other, the first device 1000 may determine to share the content with the second device 2000. In this case, the first device 1000 may display a user interface (UI) for determining to share content with the second device 2000 on a screen of the first device 1000. The UI may include a list of the second devices 2000 that are related to the first device 1000, and based on an input of user selection through the UI, whether the content is to be shared between the first device 1000 and the second device 2000 may be determined.

Also, the first device 1000 may determine whether the first device 1000 and the second device 2000 are related to each other, and based on a result of the determination, the first device 1000 may filter the second device 2000. For example, the first device 1000 may determine whether the first device 1000 and the second device 2000 are related to each other by using, for example, contact details included in an address book of the first device 1000. For another example, the first device 1000 may filter the second device 2000 based on a content share history with respect to the second device 2000.

Also, the first device 1000 may receive the SNS service ID of the second user of the second device 2000 from the second device 2000 and may determine whether the first device 1000 and the second device 2000 are related to each other by using the SNS service ID of the first user of the first device 1000 and the SNS service ID of the second user of the second device 2000. In this case, the first device 1000 may provide the SNS service ID of the first user of the first device 1000 to the SNS server 5000 and may receive relation information of the first user from the SNS server 5000. The first device 1000 may determine whether the SNS service ID of the second user is included in the relation information of the first user, and thus, may determine whether the first device 1000 and the second device 2000 are related to each other.

Also, the first device 1000 may provide the SNS service ID of the first user and the SNS service ID of the second user to the content providing server 4000, and the content providing server 4000 may determine whether the first device 1000 and the second device 2000 are related to each other by using the SNS service ID of the first user and the SNS service ID of the second user, and may notify a result of the determination to the first device 1000.

Additionally, the first device 1000 may filter the second device 2000, in consideration of the location of the first device 1000, a schedule of the first user, a time, weather, etc.

In operation S730, the first device 1000 notifies the content providing server 4000 that the first device 1000 and the second device 2000 are adjacent to each other. The first device 1000 may provide the ID value of the first device 1000 and the ID value of the second device 2000 to the content providing server 4000 and notify the content providing server 4000 that the first device 1000 and the second device 2000 are adjacent to each other.

In operation S740, the content providing server 4000 determines that the second device 2000 is adjacent to the first device 1000 based on the notification by the first device 1000. The content providing server 4000 may receive ID values of a plurality of the second devices 2000 and may filter at least one of the second devices 2000. The content providing server 4000 may determine the filtered second device 2000 as a device to share content with the first device 1000. To perform the filtering operation, a list of devices related to the first device 1000 may be pre-stored in the content providing server 4000. The list of devices related to the first device 1000, which is used in the filtering operation, may be set to vary according to, for example, a location of the first device 1000.

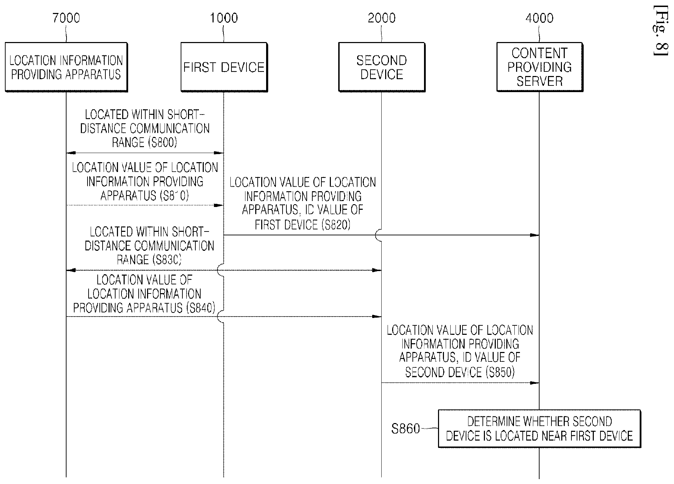

FIG. 8 is a flowchart of a method of determining whether the second device 2000 is located near the first device 1000 based on a location value of a location information providing apparatus 7000, the method performed by the content providing server 4000, according to an exemplary embodiment.

In operation S800, the first device 1000 is located within a short-distance communication range of the location information providing apparatus 7000. A first user may have the first device 1000 near the location information providing apparatus 7000, and thus may have the first device 1000 within the short-distance communication range of the location information providing apparatus 7000. The location information providing apparatus 7000 may be an apparatus for providing location information about a place whereof the location information providing apparatus 7000 is located, to a device that is located within the short-distance communication range of the location information providing apparatus 7000.

In operation S810, the location information providing apparatus 7000 provides a location value of the location information providing apparatus 7000 to the first device 1000. The location value of the location information providing apparatus 7000 may include, for example, a value of GPS coordinates, a building name, a street name, or an address of the place where the location information providing apparatus 7000 is located. The location information providing apparatus 7000 may provide the location value of the location information providing apparatus 7000 to the first device 1000 by using at least one of NFC communication, RFID communication, and Bluetooth communication.

In an exemplary embodiment, the location information providing apparatus 7000 may provide an ID value of the location information providing apparatus 7000 to the first device 1000, and the location value of the location information providing apparatus 7000 that corresponds to the ID value of the location information providing apparatus 7000 may be provided to the first device 1000. The location value of the location information providing apparatus 7000 that corresponds to the ID value of the location information providing apparatus 7000 may be stored in at least one of the first device 1000, the second device 2000, the content providing server 4000, the SNS server 5000, and a separate server (not shown), but exemplary embodiments are not limited thereto.

In operation S820, the first device 1000 provides the location value of the location information providing apparatus 7000 and the ID value of the first device 1000 to the content providing server 4000.

In operation S830, the second device 2000 is located within the short-distance communication range of the location information providing apparatus 7000. A second user may have the second device 2000 near the location information providing apparatus 7000, and thus may have the second device 2000 within the short-distance communication range of the location information providing apparatus 7000.

In operation S840, the location information providing apparatus 7000 provides the location value of the location information providing apparatus 7000 to the second device 2000. The location value of the location information providing apparatus 7000 may include, for example, the value of GPS coordinates, the building name, the street name, or the address of the place where the location information providing apparatus 7000 is located.

The location information providing apparatus 7000 may provide the ID value of the location information providing apparatus 7000 to the second device 2000, and the location value of the location information providing apparatus 7000 that corresponds to the ID value of the location information providing apparatus 7000 may be provided to the first device 1000.

In operation S850, the second device 2000 provides the location value of the location information providing apparatus 7000 and the ID value of the second device 2000 to the content providing server 4000.

In operation S860, the content providing server 4000 determines whether the second device 2000 is located near the first device 1000. The content providing server 4000 may compare the location value of the location information providing apparatus 7000 that is received from the first device 1000 with the location value of the location information providing apparatus 7000 that is received from the second device 2000. In a case where the location value of the location information providing apparatus 7000 that is received from the first device 1000 is equal to the location value of the location information providing apparatus 7000 that is received from the second device 2000, the content providing server 4000 may determine that the second device 2000 is located near the first device 1000.

When the location information providing apparatus 7000 provides the location value of the location information providing apparatus 7000 to each of the first device 1000 and the second device 2000, the content providing server 4000 may receive the location value of the location information providing apparatus 7000 from each of the first device 1000 and the second device 2000. When the location value of the location information providing apparatus 7000 that is received from the first device 1000 is equal to the location value of the location information providing apparatus 7000 that is received from the second device 2000, the content providing server 4000 may determine that the second device 2000 is located near the first device 1000.

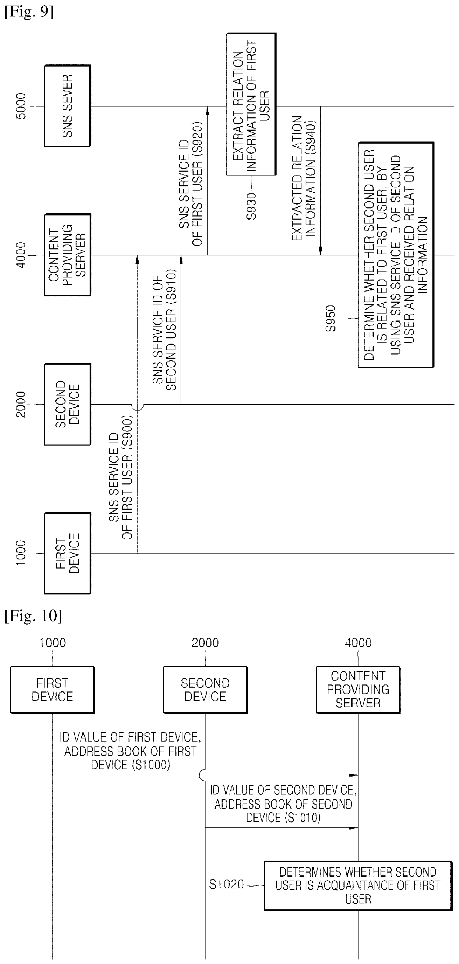

FIG. 9 is a flowchart of a method of determining whether a second user is associated with a first user by using SNS service IDs, the method performed by the content providing server 4000, according to an exemplary embodiment.

Referring to FIG. 9, the content providing server 4000 may determine whether the second user is an acquaintance of the first user. For example, the content providing server 4000 may determine whether the second user is a friend, a family member, or a co-worker of the first user.

In operation S900, the first device 1000 provides the SNS service ID of the first user to the content providing server 4000. In a case where the first user subscribes to a plurality of SNS services, the first device 1000 may provide a plurality of SNS service IDs of the first user to the content providing server 4000. Also, the first device 1000 may provide ID values of the SNS services that respectively correspond to the SNS service IDs of the first user to the content providing server 4000.

In operation S910, the second device 2000 provides the SNS service ID of the second user to the content providing server 4000. In a case where the second user subscribes to a plurality of SNS services, the second device 2000 may provide a plurality of SNS service IDs of the second user to the content providing server 4000. Also, the second device 2000 may provide ID values of the SNS services that respectively correspond to the SNS service IDs of the second user to the content providing server 4000.

In operation S920, the content providing server 4000 provides the SNS service ID of the first user to the SNS server 5000. In a case where the first user has the plurality of SNS service IDs, the content providing server 4000 may check a plurality of SNS servers 5000 that respectively correspond to the SNS service IDs of the first user. Also, the content providing server 4000 may transmit the SNS service IDs to the SNS servers 5000 that respectively correspond to the SNS service IDs of the first user.

In operation S930, the SNS server 5000 extracts relation information of the first user. The SNS server 5000 may extract, from the DB 4600 of the content providing server 4000, the relation information of the first user by using the SNS service ID of the first user. The relation information may be information about a user who is related to the first user among users who use the SNS service. The relation information may indicate, from among the users, users who are friends, families, and co-workers of the first user. Also, the relation information may be a social graph in the form of a tree structure which connects the first user and other users that are related to the first user.

In operation S940, the SNS server 5000 provides the relation information to the content providing server 4000.

In operation S950, the content providing server 4000 determines whether the second user is related to the first user by using the SNS service ID of the second user and the relation information and the relation information, and based on a result of the determination, the content providing server 4000 may determine whether to share content of the second user with the first user. A degree of relatedness between the first and second users for the sharing of the content may be preset by the first user.

In the flowchart of FIG. 9, the content providing server 4000 determines whether the first user and the second user are related to each other by using the relation information of the first user, but exemplary embodiments are not limited thereto. For example, the content providing server 4000 may determine whether the first user and the second user are related to each other by using relation information of the second user. In this case, the content providing server 4000 may provide the SNS service ID of the second user to the SNS server 5000 and may receive the relation information of the second user from the SNS server 5000. Thus, the content providing server 4000 may determine whether the first user and the second user are related to each other by using at least one of the relation information of the first user and the relation information of the second user.

FIG. 10 is a flowchart of a method of determining whether a second user is associated with a first user, by using an address book, the method performed by the content providing server 4000, according to an exemplary embodiment.

Referring to FIG. 10, the content providing server 4000 may determine whether the second user is an acquaintance of the first user.

In operation S1000, the first device 1000 provides the ID value of the first device 1000 and an address book of the first device 1000 to the content providing server 4000. The address book of the first device 1000 that is provided to the content providing server 4000 may be matched with the ID value of the first device 1000 and may be stored in the DB 4600 of the content providing server.

In operation S1010, the second device 2000 provides the ID value of the second device 2000 and an address book of the second device 2000 to the content providing server 4000. The address book of the second device 2000 that is provided to the content providing server 4000 may be matched with the ID value of the second device 2000 and may be stored in the DB 4600.

In an exemplary embodiment, the content providing server 4000 collects another address book of the first user and another address book of the second user from an external server (not shown). The content providing server 4000 may obtain user information about the first user based on the ID value of the first device 1000 and may collect, from the external server, the other address book of the first user that is stored in the external server by using the user information. Here, the external server may include, for example, a portal service providing server, the SNS server 5000, and a community service providing server, but exemplary embodiments are not limited thereto. The external server may include all types of servers capable of storing address books of the first user.

The content providing server 4000 may obtain user information about the second user based on the ID value of the second device 2000 and may collect, from the external server, the other address book of the second user that is stored in the external server by using the user information.

In operation S1020, the content providing server 4000 determines whether the second user is an acquaintance of the first user. The content providing server 4000 may determine whether the second user is the acquaintance of the first user based on the address book of the first user and the address book of the second user. For example, in a case where the ID value (e.g., a name, a nickname, or an ID) of the first user is included in the address book of the second user, and the ID value (e.g., a name, a nickname, or an ID) of the second user is included in the address book of the first user, the content providing server 4000 may determine that the second user is the acquaintance of the first user. Additionally, the content providing server 4000 may determine whether the second user is an acquaintance of the first user based on the other address book of the first user and the other address book of the second user collected from the external server.

The content providing server 4000 may determine whether the first user and the second user are related to each other based on a schedule of the first user and a schedule of the second user. In this case, the content providing server 4000 may receive schedule information of the first user from the first device 1000 and may receive schedule information of the second user from the second device 2000. The schedule information may be stored in a calendar application of each of the first and second devices 1000 and 2000. The content providing server 4000 may check whether information about the second user is included in the schedule information of the first user, and whether information about the first user is included in the schedule information of the second user, and thus may determine whether the first user and the second user are related to each other.

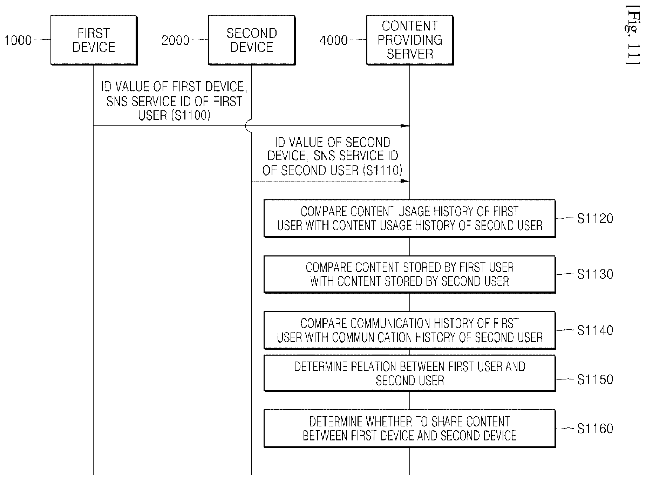

FIG. 11 is a flowchart of a method of determining whether a second user is associated with a first user based on an activity and content of each user, the method performed by the content providing server 4000, according to an exemplary embodiment.

In operation S1100, the first device 1000 provides the ID value of the first device 1000 and the SNS service ID of the first user to the content providing server 4000. The first device 1000 may transmit, as device information of the first device 1000, the ID value of the first device 1000 to the content providing server 4000. The ID value of the first device 1000 may include, for example, a model name, a serial number, a phone number, etc. of the first device 1000. Also, the first device 1000 may provide, as user information about the first user, the SNS service ID of an SNS service subscribed by the first user to the content providing server 4000. The first device 1000 may transmit an ID of the first user that is registered in the content providing server 4000 to the content providing server 4000.

In operation S1110, the second device 2000 provides the ID value of the second device 2000 and the SNS service ID of the second user to the content providing server 4000. The second device 2000 may transmit, as device information of the second device 2000, the ID value of the second device 2000 to the content providing server 4000. The ID value of the second device 2000 may include, for example, a model name, a serial number, a phone number, etc. of the second device 2000. Also, the second device 2000 may provide, as user information about the second user, the SNS service ID of an SNS service subscribed by the second user to the content providing server 4000. The second device 2000 may transmit an ID of the second user that is registered in the content providing server 4000 to the content providing server 4000.

In operation S1120, the content providing server 4000 compares a content usage history of the first user with a content usage history of the second user. The content providing server 4000 may check content received from the first device 1000 and content provided to the first device 1000 based on the ID value of the first device 1000. Also, the content providing server 4000 may check content used by the first user via the SNS server 5000 based on the SNS service ID of the first user. Also, the content providing server 4000 may check content used by the first user via the content providing server 4000 by using the ID of the first user that is registered in the content providing server 4000.

Also, the content providing server 4000 may check content received from the second device 2000 and content provided to the second device 2000 based on the ID value of the second device 2000. Also, the content providing server 4000 may check content used by the second user via the SNS server 5000 based on the SNS service ID of the second user. Also, the content providing server 4000 may check content used by the second user via the content providing server 4000 by using the ID of the second user that is registered in the content providing server 4000.

In operation S1130, the content providing server 4000 compares content stored by the first user with content stored by the second user.

The content providing server 4000 may check the content stored by the first user based on at least one of the ID value of the first device 1000, the SNS service ID of the first user, and the ID of the first user that is registered in the content providing server 4000. The content stored by the first user may be stored in at least one of the first device 1000, another device of the first user, the SNS server 5000, and the content providing server 4000.

Also, the content providing server 4000 may check the content stored by the second user based on at least one of the ID value of the second device 2000, the SNS service ID of the second user, and the ID of the second user that is registered in the content providing server 4000. The content stored by the second user may be stored in at least one of the second device 2000, another device of the second user, the SNS server 5000, and the content providing server 4000.

In operation S1140, the content providing server 4000 compares a communication history of the first user with a communication history of the second user. The content providing server 4000 may compare a communication history between the first user and the second user based on the SNS service ID of the first user and the SNS service ID of the second user. The content providing server 4000 may provide the SNS service ID of the first user and the SNS service ID of the second user to the SNS server 5000 and may receive the communication history of the first user and the communication history of the second user from the SNS server 5000.

In operation S1150, the content providing server 4000 determines a relation between the first user and the second user. The content providing server 4000 may determine whether the first user and the second user are related to each other based on a result of at least one of the comparisons performed in operations S1120 through S1140. Additionally, the content providing server 4000 may determine whether the first user and the second user are related to each other based on a preset reference. The preset reference may be set based on a type of content, the number of similar contents, and the number of communications performed between the first user and the second user, but exemplary embodiments are not limited thereto.

In operation S1160, the content providing server 4000 determines whether to share content between the first device 1000 and the second device 2000. When the content providing server 4000 determines that the first user and the second user are related to each other, the content providing server 4000 may determine to share the content between the first device 1000 and the second device 2000.

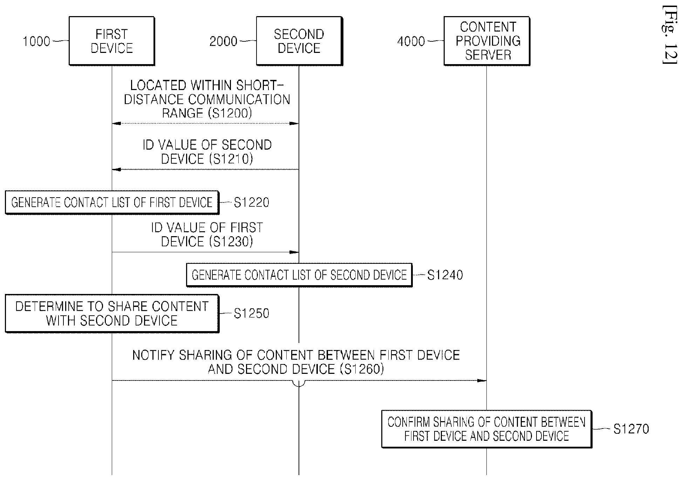

FIG. 12 is a flowchart of a method of notifying the content providing server 4000 that the first device 1000 and the second device 2000 are related to each other, the method performed by the first device 1000, according to an exemplary embodiment.

In operation S1200, the first device 1000 is located within a short-distance communication range of the second device 2000. A first user may have the first device 1000 near the second device 2000, and thus may have the first device 1000 within the short-distance communication range of the second device 2000.

In operation S1210, the second device 2000 transmits the ID value of the second device 2000 to the first device 1000. When the first device 1000 is located within the short-distance communication range of the second device 2000, the first device 1000 and the second device 2000 may be connected to each other. Also, the ID value of the second device 2000 may include, for example, a phone number, a model name, a serial number, etc. of the second device 2000.

In operation S1220, the first device 1000 generates a contact list. The first device 1000 may store the ID value of the second device 2000 that is connected with the first device 1000 via short-distance communication and thus may generate the contact list. In this case, the first device 1000 may determine whether to include the ID value of the second device 2000 in the contact list, according to a user input via an UI. For example, when the first device 1000 and the second device 2000 are connected via the short-distance communication, the first device 1000 may display an UI to determine whether to share content with the second device 2000 on a screen of the first device 1000. When the user input that allows the sharing of the content is received via the UI, the first device 1000 may include the ID value of the second device 2000 in the contact list.

In operation S1230, the first device 1000 provides the ID value of the first device 1000 to the second device 2000. When the first device 1000 is located within the short-distance communication range of the second device 2000, the first device 1000 and the second device 2000 may be connected to each other. Also, the ID value of the first device 1000 may include, for example, a phone number, a model name, a serial number, etc. of the first device 1000.

In operation S1240, the second device 2000 generates a contact list. The second device 2000 may store the ID value of the first device 1000 that is connected with the second device 2000 via short-distance communication and thus may generate the contact list. In this case, the second device 2000 may determine whether to include the ID value of the first device 1000 in the contact list, according to a user input via an UI. For example, when the first device 1000 and the second device 2000 are connected via short-distance communication, the second device 2000 may display an UI to determine whether to share content with the first device 1000 on a screen of the second device 2000. When the user input that allows the sharing of the content is received via the UI, the second device 2000 may include the ID value of the first device 1000 in the contact list.

In operation S1250, the first device 1000 determines to share the content with the second device 2000. When the first device 1000 and the second device 2000 are connected via short-distance communication, the first device 1000 may display the UI to determine whether to share the content with the second device 2000 on the screen of the first device 1000. According to the user input that allows the sharing of the content, which is received via the UI, the first device 1000 may determine to share the content with the second device 2000. When the second device 2000 is included in the contact list that is previously generated by the first device 1000, the first device 1000 may determine to share the content with the second device 2000, without receiving a separate user input.

The contact list generated by the first device 1000 and the contact list generated by the second device 2000 may be provided to the content providing server 4000, and the content providing server 4000 may determine whether the first device 1000 and the second device 2000 are adjacent to each other by using the contact lists.

In the flowchart of FIG. 12, the contact list of the first device 1000 and the contact list of the second device 2000 are generated before operation S1250 is performed, but exemplary embodiments are not limited thereto. For example, when the first device 1000 determines to share the content with the second device 2000, the second device 2000 may be included in the contact list of the first device 1000, and the first device 1000 may be included in the contact list of the second device 2000.

In operation S1260, the first device 1000 notifies the sharing of the content between the first device 1000 and the second device 2000 to the content providing server 4000. When the first device 1000 notifies the content providing server 4000 that the first device 1000 determines to share the content with the second device 2000, the first device 1000 may provide the ID value of the first device 1000 and the ID value of the second device 2000 to the content providing server 4000.

In operation S 1270, the content providing server 4000 confirms the sharing of the content between the first device 1000 and the second device 2000. Also, the content providing server 4000 may obtain user information about the first user and user information about the second user from at least one of the first device 1000 and the second device 2000.

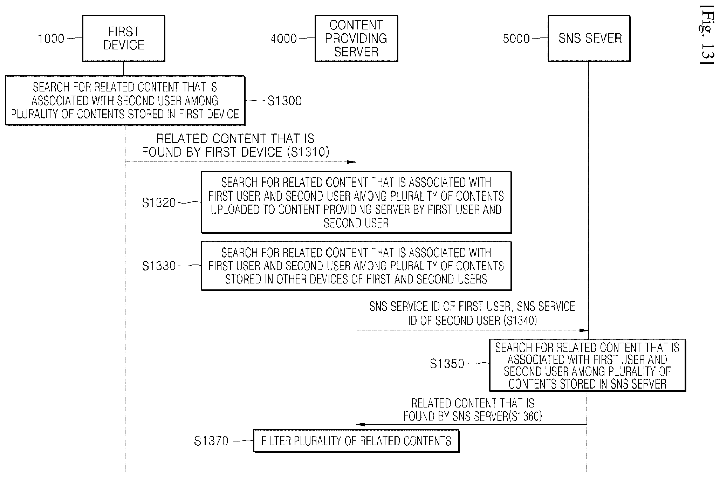

FIG. 13 is a flowchart of a method of searching for content to be shared between the first device 1000 and the second device 2000 according to an exemplary embodiment.

Referring to FIG. 13, the content may include, for example, at least one of a still image, a video, music, a document, and a message. When the content is a still image, the content that is associated with the first user and the second user may be a picture in which images of the first user and the second user are together. When the content is a video, the content that is associated with the first user and the second user may be a moving picture in which images of the first user and the second user are together or that was watched together by the first user and the second user. When the content is music, the content that is associated with the first user and the second user may be music listened to by the first user and the second user together. When the content is a document, the content that is associated with the first user and the second user may be a document co-produced by the first user and the second user. When the content is a message, the content that is associated with the first user and the second user may be a message exchanged between the first user and the second user. However, types of the content that is associated with the first user and the second user are not limited thereto.

In operation S1300, the first device 1000 searches for related content that is associated with the second user among a plurality of contents stored in the first device 1000. For example, when the content is a still image, the first device 1000 may search for a still image that includes a face of the second user among still images stored in the first device 1000. In this case, the first device 1000 may obtain a face image of the second user from at least one of the second device 2000, the content providing server 4000, and the SNS server 5000, and may search for the still image including the face of the second user by using the obtained face image.

In operation S1310, the first device 1000 provides the related content that is found by the first device 1000 to the content providing server 4000. The first device 1000 may upload the related content to the content providing server 4000. However, exemplary embodiments are not limited thereto. For example, the first device 1000 may provide link information for accessing the related content to the content providing server 4000.

Also, the first device 1000 may provide a portion of a plurality of the found related contents to the content providing server 4000. The first device 1000 may filter the plurality of found related contents according to a preset reference and may provide the plurality of found related contents filtered by the first device 1000 to the content providing server 4000. The preset reference with respect to filtering the plurality of found related contents may vary depending on, for example, a location of the first device 1000, a relation between the first user and the second user, the number of second devices 2000 located near the first device 1000, a type of the third device 3000 located near the first device 1000, or the number of acquaintances related to the content.

In operation S1320, the content providing server 4000 searches for related content that is associated with the first user and the second user among a plurality of contents uploaded to the content providing server 4000 by the first user and a plurality of contents uploaded to the content providing server 4000 by the second user.

The content providing server 4000 may recognize the plurality of contents uploaded to the content providing server 4000 by the first user based on user information about the first user. Then, the content providing server 4000 may search for the related content that is associated with the first user and the second user among the plurality of recognized contents.

Also, the content providing server 4000 may recognize the plurality of contents uploaded to the content providing server 4000 by the second user based on user information about the second user. Then, the content providing server 4000 may search for the related content that is associated with the first user and the second user among the plurality of recognized contents.

In operation S1330, the content providing server 4000 may search for the related content that is associated with the first user and the second user among a plurality of contents stored in other devices of the first and second users. The content providing server 4000 may obtain access information (e.g., a link address) for accessing the other device of the first user and access information (e.g., a link address) for accessing the other device of the second user, and may search for the related content that is associated with the first user and the second user among the plurality of contents stored in the other devices of the first and second users by using the obtained access information. The other devices of the first and second users may include, but are not limited to, a PC, a smart TV, or a tablet PC.

In operation S1340, the content providing server 4000 provides the SNS service ID of the first user and the SNS service ID of the second user to the SNS server 5000. Also, the content providing server 4000 may request the SNS server 5000 for the related content that is associated with the first user and the second user.

In operation S1350, the SNS server 5000 searches for the related content that is associated with the first user and the second user among a plurality of contents stored in the SNS server 5000. The SNS server 5000 may search for, by using the SNS service ID of the first user, the related content that is associated with the first user and the second user among a plurality of contents uploaded to the SNS server 5000 by the first user. Also, the SNS server 5000 may search for, by using the SNS service ID of the second user, the related content that is associated with the first user and the second user among a plurality of contents uploaded to the SNS server 5000 by the second user.

In operation S1360, the SNS server 5000 provides the related content that is found by the SNS server 5000 to the content providing server 4000.

Alternatively, the SNS server 5000 may provide a portion of a plurality of the found related content to the content providing server 4000. The SNS server 5000 may filter the plurality of the found related contents according to a preset reference, and may provide a portion of the plurality of the found related contents that are filtered by the SNS server 5000 to the content providing server 4000. The preset reference with respect to filtering the plurality of found related content may vary depending on, for example, a location of the first device 1000, a relation between the first user and the second user, the number of second devices 2000 located near the first device 1000, a type of the third device 3000 located near the first device 1000, or the number of acquaintances related to the content. The preset reference with respect to filtering the plurality of related contents may be pre-stored in the SNS server 5000.

In operation S1370, the content providing server 4000 filters a plurality of related contents. The content providing server 4000 may filter the plurality of related contents according to a preset reference. For example, the preset reference may vary depending on, for example, a location of the first device 1000, a relation between the first user and the second user, the number of second devices 2000 located near the first device 1000, a type of the third device 3000 located near the first device 1000, or the number of acquaintances related to the content. For example, when a plurality of second devices 2000 are located near the first device 1000, the first device 1000 may extract content that is associated with a preset number of users from among the first user and a plurality of second users of the plurality of second devices 2000.

The plurality of related contents that are filtered by the content providing server 4000 may be provided to the first device 1000 and the second device 2000. The first device 1000 and the second device 2000 may re-filter the plurality of related contents that are filtered by the content providing server 4000.

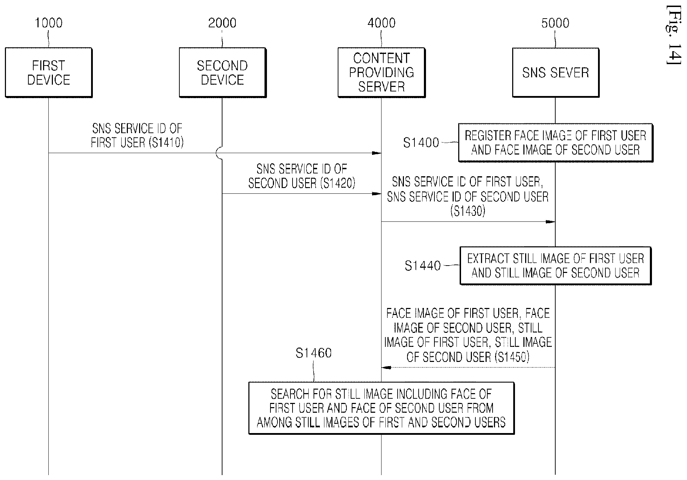

FIG. 14 is a flowchart of a method of searching for a still image that is associated with a first user and a second user among still images stored in the SNS server 5000, the method performed by the content providing server 4000, according to an exemplary embodiment.

Referring to FIG. 14, the content providing server 4000 may search for a still image that is associated with the first user and the second user by using face images of the first and second users which are received from the SNS server 5000.

In operation S1400, the SNS server 5000 registers the face image of the first user and the face image of the second user. The first and second users may previously register their own face images in the SNS server 5000, and the SNS server 5000 may match the face image of the first user with the SNS service ID of the first user, match the face image of the second user with the SNS service ID of the second user, and store the face images of the first and second users.

In operation S1410, the first device 1000 provides the SNS service ID of the first user to the content providing server 4000, and in operation S1420, the second device 2000 provides the SNS service ID of the second user to the content providing server 4000.

In operation S 1430, the content providing server 4000 provides the SNS service ID of the first user and the SNS service ID of the second user to the SNS server 5000.

In operation S1440, the SNS server 5000 extracts a still image of the first user and a still image of the second user. The SNS server 5000 may extract, from a DB (not shown), the still image of the first user that is uploaded to the SNS server 5000 by using the SNS service ID of the first user. Also, the SNS server 5000 may extract, from the DB, the still image of the second user that is uploaded to the SNS server 5000 by using the SNS service ID of the second user.

In operation S 1450, the SNS server 5000 provides the face image of the first user, the face image of the second user, the still image of the first user, and the still image of the second user to the content providing server 4000. In an exemplary embodiment, the SNS server 5000 may provide, to the content providing server 4000, link information for downloading each of the face image of the first user, the face image of the second user, the still image of the first user, and the still image of the second user.

In operation S1460, the content providing server 4000 searches for a still image including a face of the first user and a face of the second user, from among the still images of the first and second users. The content providing server 4000 may search for a still image including the faces of the first and second users from among the still images of the first and second users by using the face image of the first user and the face image of the second user. In more detail, the content providing server 4000 may detect face recognition information from each of the still images of the first and second users and may search for the still image including the faces of the first and second users based on the face recognition information.

The detection of the face recognition information may be performed by using a feature-based method, an appearance-based method, or a hybrid method. The feature-based method involves recognizing a face by using geometric information about a face, or by using information including sizes, shapes, a mutual-relation, or a mixture thereof about facial feature components (e.g., eyes, a nose, a mouth, a chin, etc.). The feature-based method may include, for example, a pure geometry method, a dynamic link architecture-based method, and a hidden Markov model-based method. The appearance-based method involves recognizing a face by using a model that is learned by a learned image group. The appearance-based method may include, for example, a method of using a unique face that is generated via a principal component analysis, a method of using a linear discriminant analysis, a method of using a neural network, and a method of using a support vector machine. Also, the hybrid method uses the feature-based method combined with the appearance-based method. The hybrid method may include, for example, a linear feature analysis-based method, a shape normalization-based method, and a component-based method.

However, the detection of the face recognition information is not limited to the aforementioned methods, and thus various methods may be used to perform the detection of the face recognition information.

The content providing server 4000 may search for the still image, including the faces of the first and second users, by using metadata of the still image of the first user and metadata of the still image of the second user. The metadata may include a photographed place, a photographed time, a name of a person included in the still image, etc. The name of the person included in the still image may be input by a user after the still image is captured. For example, the content providing server 4000 may search for a still image that was captured at a predetermined place and a still image that was captured at a predetermined time, from among the still images of the first and second users. The content providing server 4000 may filter a still image having metadata that includes a name of the first user and a name of the second user, from among the found still images.

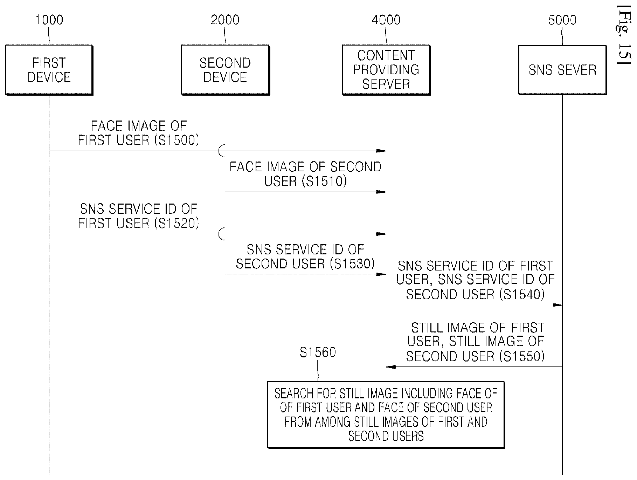

FIG. 15 is a flowchart of a method of filtering still images stored in the SNS server 5000 by using face images of first and second users that are received from the first device 1000 and the second device 2000, respectively, the method performed by the content providing server 4000, according to an exemplary embodiment.

Referring to FIG. 15, the face image of the first user and the face image of the second user may be registered in the content providing server 4000.

In operation S1500, the first device 1000 registers the face image of the first user in the content providing server 4000, and in operation S1510, the second device 2000 registers the face image of the second user in the content providing server 4000.

In operation S1520, the content providing server 4000 receives the SNS service ID of the first user from the first device 1000, and in operation S1530, the content providing server 4000 receives the SNS service ID of the second user from the second device 2000.

In operation S1540, the content providing server 4000 provides the SNS service ID of the first user and the SNS service ID of the second user to the SNS server 5000. Also, the content providing server 4000 may request a still image of the first user and a still image of the second user from the SNS server 5000.

In operation S1550, the SNS server 5000 provides the still image of the first user and the still image of the second user to the content providing server 4000. The SNS server 5000 may extract the still image of the first user that is stored in the SNS server 5000 by using the SNS service ID of the first user. Also, the SNS server 5000 may extract the still image of the second user that is stored in the SNS server 5000 by using the SNS service ID of the second user. The SNS server 5000 may provide link information for downloading each of the still image of the first user and the still image of the second user to the content providing server 4000.

In operation S1560, the content providing server 4000 searches for a still image, including a face of the first user and a face of the second user, from among the still images of the first and second users. The content providing server 4000 may search for the still image, including the faces of the first and second users, from among the still images of the first and second users, by using the face image of the first user that is registered in operation S1500 and the face image of the second user that is registered in operation S1510.

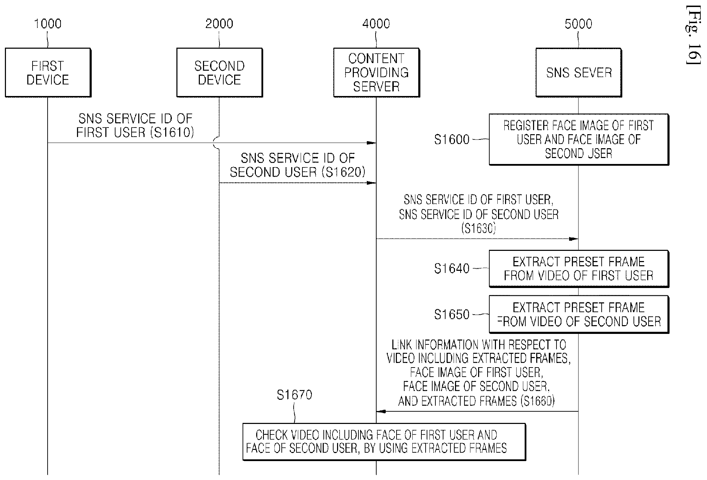

FIG. 16 is a flowchart of a method of searching for a video that is associated with a first user and a second user among videos stored in the SNS server 5000, the method performed by the content providing server 4000, according to an exemplary embodiment.

Operations S1600 through S1630 correspond to operations S1400 through S1430 in the exemplary embodiment in FIG. 14, thus, descriptions about operations S1600 through S1630 are omitted here.

In operation S1640, the SNS server 5000 extracts a preset frame from a video of the first user. The SNS server 5000 may obtain the video of the first user by using the SNS service ID of the first user from the DB 4600 of the content providing server 4000. For example, the SNS server 5000 may extract a frame that includes at least a preset number of people, from the video of the first user. In this case, when the video of the first user is uploaded to the SNS server 5000, the SNS server 5000 may analyze frames of the video of the first user and may extract the frame, including at least a preset number of people, from the frames of the video of the first user.

In operation S1650, the SNS server 5000 extracts a preset frame from a video of the second user. The SNS server 5000 may obtain the video of the second user by using the SNS service ID of the second user from the DB 4600. For example, the SNS server 5000 may extract a frame that includes at least a preset number of people, from the video of the second user. In this case, when the video of the second user is uploaded to the SNS server 5000, the SNS server 5000 may analyze frames of the video of the second user and may extract the frame, including at least a preset number of people, from the frames of the video of the second user.

In operation S1660, the SNS server 5000 may provide, to the content providing server 4000, link information for downloading the videos including the extracted frames, a face image of the first user, a face image of the second user, and the extracted frames.

In operation S1670, the content providing server 4000 checks a video including a face of the first user and a face of the second user by using the extracted frames. The content providing server 4000 may select a frame that includes the faces of the first and second users among the extracted frames and may check the video including the selected frame.

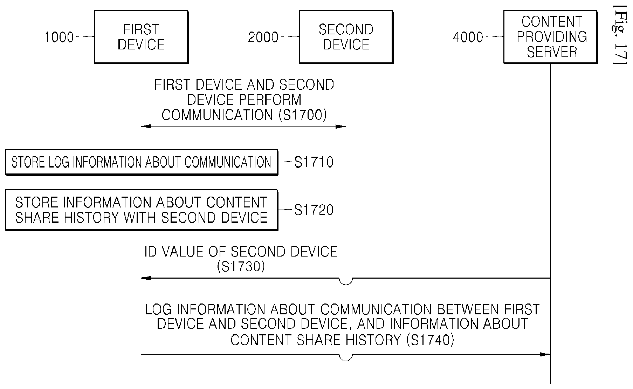

FIG. 17 is a flowchart of a method of obtaining log information about communication between the first device 1000 and the second device 2000 and obtaining a content share history between the first device 1000 and the second device 2000, the method performed by the content providing server 4000, according to an exemplary embodiment.

In operation S1700, the first device 1000 and the second device 2000 perform communication therebetween. For example, the first device 1000 and the second device 2000 may exchange a call, chat, and/or a text.

In operation S1710, the first device 1000 stores log information about communication with the second device 2000. The log information may include a log about exchange of the call, the chat, and/or the text, and a log about a communication history between the first device 1000 and the second device 2000.

In operation S 1720, the first device 1000 stores information about a content share history with the second device 2000. The information about a content share history may include a location where the first device 1000 and the second device 2000 share content, a movie ticket of a movie that the first user and the second user watch together, news shared between the first device 1000 and the second device 2000, a history of a search performed by both of the first device 1000 and the second device 2000, schedule information of each of the first device 1000 and the second device 2000, etc.

In operation S 1730, the content providing server 4000 provides the ID value of the second device 2000 to the first device 1000. Also, the content providing server 4000 may request the first device 1000 for the log information about the communication between the first device 1000 and the second device 2000, and the information about a content share history.

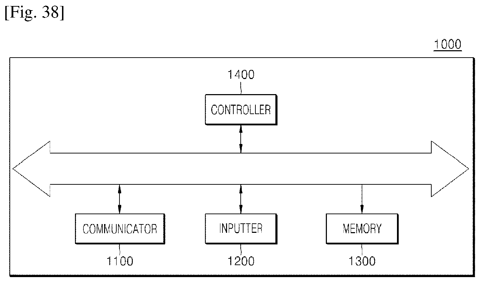

In operation S 1740, the first device 1000 provides the log information about the communication between the first device 1000 and the second device 2000, and the information about a content share history to the content providing server 4000. The first device 1000 may extract the log information about the communication between the first device 1000 and the second device 2000, and the information about a content share history, from a memory 1300 (refer to FIG. 38). The first device 1000 may provide the extracted log information and the extracted information about a content share history to the content providing server 4000. The content providing server 4000 may select content that is associated with the first user and the second user by using the log information and the information about a content share history.

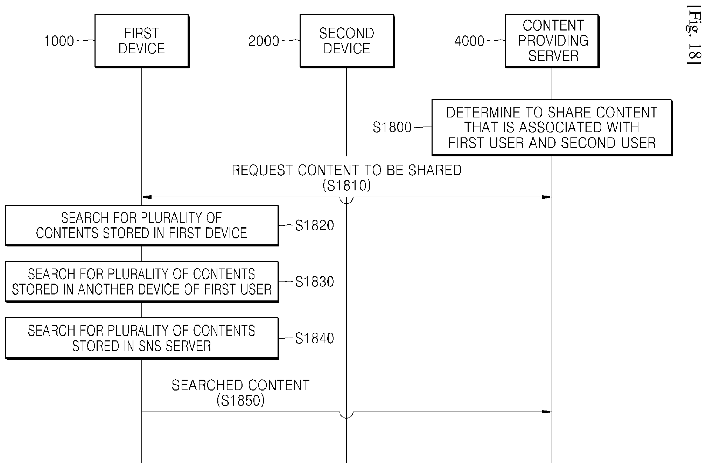

FIG. 18 is a flowchart of a method of searching for content that is associated with a first user and a second user and providing the found content to the content providing server 4000, the method performed by the first device 1000, according to an exemplary embodiment.

In operation S1800, the content providing server 4000 determines that the first device 1000 and the second device 2000 are to share content that is associated with the first user and the second user. For example, when the first device 1000 and the second device 2000 are located within a preset distance and the first user and the second user are acquaintances, the content providing server 4000 may determine sharing of the content that is associated with the first user and the second user.

In operation S1810, the content providing server 4000 requests the first device 1000 for content to be shared. The content providing server 4000 may provide at least one of a face image and the SNS service ID of the second user to the first device 1000.

In operation S1820, the first device 1000 searches a plurality of contents stored in the first device 1000. The first device 1000 may search for content that is associated with the first user and the second user among the plurality of contents stored in the first device 1000. For example, the first device 1000 may search for the content that is associated with the first user and the second user among the plurality of contents stored in the first device 1000 by using a face image of the first user and the face image of the second user.

In operation S1830, the first device 1000 searches for content that is stored in another device of the first user. The first device 1000 may search for the content that is associated with the first user and the second user among a plurality of contents stored in the other device of the first user. For example, the first device 1000 may search for the content that is associated with the first user and the second user among the plurality of contents stored in the other device of the first user by using the face image of the first user and the face image of the second user.

In operation S1840, the first device 1000 searches for content that is stored in the SNS server 5000. The first device 1000 may search for the content that is associated with the first user and the second user among a plurality of contents stored in the SNS server 5000. For example, the first device 1000 may search for the content that is associated with the first user and the second user among the plurality of contents stored in the SNS server 5000 by using the SNS service ID of the first user, the SNS service ID of the second user, the face image of the first user, and the face image of the second user.

In operation S1850, the first device 1000 provides the found content to the content providing server 4000. The first device 1000 may provide link information for downloading the searched content to the content providing server 4000. Also, the content providing server 4000 may provide the searched content to the second device 2000. Also, the content providing server 4000 may generate an object to provide the searched content to the second device 2000.

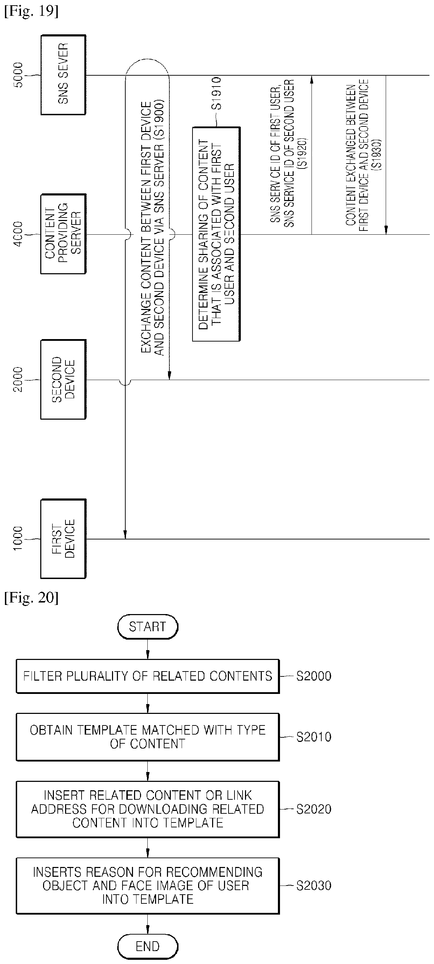

FIG. 19 is a flowchart of a method of searching for data that is exchanged between the first device 1000 and the second device 2000 via the SNS server 5000, the method performed by the content providing server 4000, according to an exemplary embodiment.

In operation S1900, content is exchanged between the first device 1000 and the second device 2000 via the SNS server 5000. The first device 1000 and the second device 2000 may transmit or receive content by using a service provided by the SNS server 5000. For example, the first device 1000 and the second device 2000 may transmit or receive a still image, a video, music, or a message via the SNS server 5000. The SNS server 5000 may match content, which is exchanged between the first device 1000 and the second device 2000, with the SNS service ID of the first user and the SNS service ID of the second user.

In operation S1910, the content providing server 4000 determines sharing of content that is associated with the first user and the second user. When the first user and the second user are located within a preset distance and the content providing server 4000 determines that the first user and the second user are related to each other, the content providing server 4000 may determine to share content between the first device 1000 and the second device 2000, wherein the content is associated with the first user and the second user.

In operation S1920, the content providing server 4000 provides the SNS service ID of the first user and the SNS service ID of the second user to the SNS server 5000. Also, the content providing server 4000 may request the SNS server 5000 for the content that is exchanged between the first device 1000 and the second device 2000.

In operation S 1930, the SNS server 5000 provides the content that is exchanged between the first device 1000 and the second device 2000 to the content providing server 4000. The SNS server 5000 may extract the content exchanged between the first device 1000 and the second device 2000 from the DB 4600 of the content providing server 4000 by using the SNS service ID of the first user and the SNS service ID of the second user. Also, the SNS server 5000 may provide the extracted content to the content providing server 4000. The content exchanged between the first device 1000 and the second device 2000 may be content that is fed between the first device 1000 and the second device 2000.

FIG. 20 is a flowchart of a method of generating an object, the method performed by the content providing server 4000, according to an exemplary embodiment.

In operation S2000, the content providing server 4000 filters a plurality of related contents. The content providing server 4000 may filter the plurality of related contents obtained from at least one of the first device 1000, the second device 2000, another device of a first user, another device of a second user, the SNS server 5000, and the DB 4600 of the content providing server 4000, according to a preset reference. The preset reference with respect to filtering the plurality of related contents may vary depending on, for example, a location of the first device 1000, a relation between the first user and the second user, the number of second devices 2000 located near the first device 1000, a type of the third device 3000 located near the first device 1000, or the number of acquaintances related to content. For example, in a case where a plurality of second devices 2000 are located near the first device 1000, the first device 1000 may extract content that is associated with at least a preset number of users from among the first user and a plurality of second users of the plurality of the second devices 2000.

In operation S2010, the content providing server 4000 obtains a template matched with a type of the content. The content providing server 4000 may store, in the DB 4600, a plurality of templates used to generate objects that are matched with a plurality of contents, respectively, according to types of the plurality of contents. The content providing server 4000 may select a template according to a type of related content.

The template may include a plurality of areas, e.g., an area for inserting a description about a service, an area for inserting an image of the service, and an area for inserting a menu and icons to use the service, but exemplary embodiments are not limited thereto.

In operation S2020, the content providing server 4000 inserts the related content or a link address for downloading the related content into the template. The content providing server 4000 may insert a title of the object and activity information about using the object into the template. An activity associated with using the object indicates an operation of providing a predetermined service based on a user input. For example, the activity may include an operation of transmitting or receiving related content, or an operation of displaying a lower template, according to an input by a user.

In operation S2030, the content providing server 4000 inserts a reason for recommending the object and a face image of the user into the template. The content providing server 4000 may insert a recommendation reason such as "recommend a previously captured image of you and your friend that you're meeting now" or "recommend music that you listened to a year ago with your friend that you're meeting now", into the template.

The content providing server 4000 may insert a face image of the first user and a face image of the second user into a lower portion of the template.

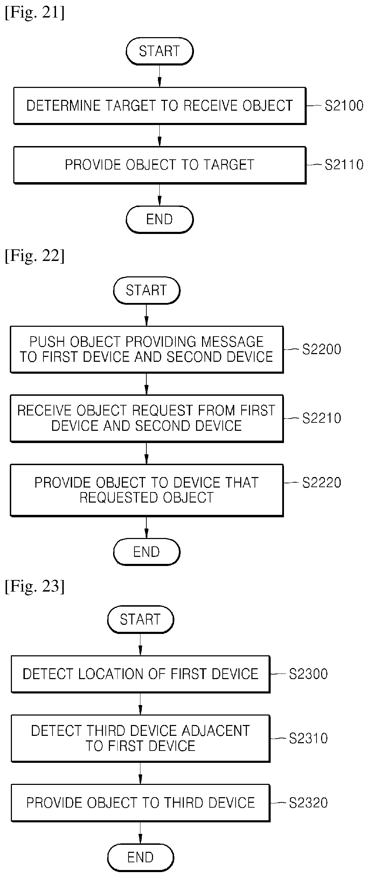

FIG. 21 is a flowchart of a method of providing an object, the method performed by the content providing server 4000, according to an exemplary embodiment.

In operation S2100, the content providing server 4000 determines a target to receive the object. The content providing server 4000 may determine to provide the object to at least one of the first device 1000 and the second device 2000. The content providing server 4000 may determine to provide the object to the third device 3000 that is located within a preset distance from the first device 1000 and the second device 2000. In this case, the content providing server 4000 may receive location information about the third device 3000 from the third device 3000 and may determine whether the third device 3000 is located within the preset distance from the first device 1000 and the second device 2000 based on the received location information. The third device 3000 may be a TV, a PC, etc. that is located near the first device 1000 and the second device 2000 but exemplary embodiments are not limited thereto.

At least one of the first device 1000 and the second device 2000 may perform short-distance communication with the third device 3000. Also, at least one of the first device 1000 and the second device 2000 may receive access information about the third device 3000 from the third device 3000 and may provide the access information about the third device 3000 to the content providing server 4000.

In operation S2110, the content providing server 4000 provides the object to the determined target. The content providing server 4000 may provide the object to at least one of the first device 1000 and the second device 2000. Also, the content providing server 4000 may provide the object to the third device 3000 that is located near the first device 1000 and the second device 2000.

Thus, the content providing server 4000 may provide the object to at least one of the first device 1000, the second device 2000, and the third device 3000.

The object that is provided to at least one of the first device 1000, the second device 2000, and the third device 3000 may be displayed on a home screen or a lock screen of at least one of the first device 1000, the second device 2000, and the third device 3000.

FIG. 22 is a flowchart of a method of providing an object to at least one of the first device 1000 and the second device 2000, the method performed by the content providing server 4000, according to an exemplary embodiment.

In operation S2200, the content providing server 4000 transmits an object providing message to the first device 1000 and the second device 2000. The object providing message functions to notify the first device 1000 and the second device 2000 that an object is provided from the content providing server 4000. The object providing message may include a button for determining whether to receive the object provided from the content providing server 4000.

In operation S2210, the content providing server 4000 receives an object request from the first device 1000 and the second device 2000. The first device 1000 and the second device 2000 may select the button included in the object providing message and thus may determine whether to receive the object provided from the content providing server 4000. Alternatively, the first device 1000 and the second device 2000 may request the content providing server 4000 to provide the object.

In operation S2220, the content providing server 4000 provides the object to a device that requests the object. That is, the content providing server 4000 may provide the object to at least one of the first device 1000 and the second device 2000.

FIG. 23 is a flowchart of a method of providing an object to the third device 3000, the method performed by the content providing server 4000, according to an exemplary embodiment.

In operation S2300, the content providing server 4000 detects a location of the first device 1000. The content providing server 4000 may receive a location value of the first device 1000 from the first device 1000. The location value of the first device 1000 may be, but is not limited to, a GPS value of the first device 1000 and an ID value of an AP connected with the first device 1000.

In operation S2310, the content providing server 4000 detects the third device 3000 adjacent to the first device 1000. The content providing server 4000 may search for the third device 3000 located near the first device 1000 based on the location value that is transmitted by the first device 1000.

Alternatively, the first device 1000 may search for the third device 3000 that is located near the first device 1000 and may provide access information for accessing the found third device 3000 to the content providing server 4000.

In operation S2320, the content providing server 4000 provides the object to the third device 3000.

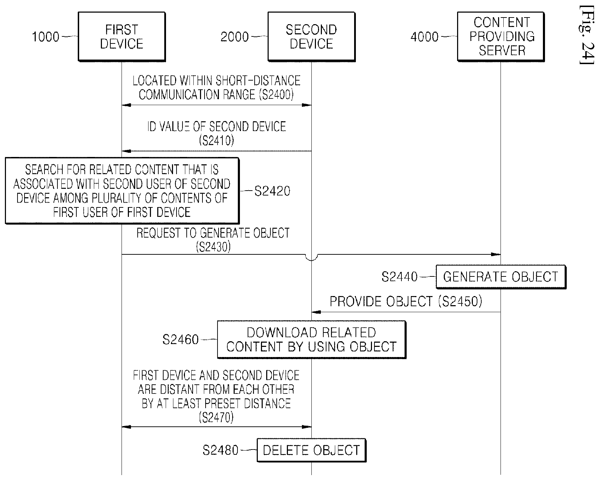

FIG. 24 is a flowchart of a method of recommending, to the second device 2000, content that is associated with a user of the second device 2000 among a plurality of contents of a user of the first device 1000, according to an exemplary embodiment.

In operation S2400, the first device 1000 is located within a short-distance communication range of the second device 2000. A first user may have the first device 1000 near the second device 2000, and thus may have the first device 1000 within the short-distance communication range of the second device 2000.

In operation S2410, the second device 2000 transmits the ID value of the second device 2000 to the first device 1000. When the first device 1000 is located within the short-distance communication range of the second device 2000, the first device 1000 and the second device 2000 may be connected to each other. For example, the first device 1000 and the second device 2000 may be connected via Wi-Fi communication, Bluetooth communication, or NFC communication. Also, the first device 1000 and the second device 2000 may be connected via the same AP. The ID value of the second device 2000 may include, for example, a phone number, a model name, a serial number, etc. of the second device 2000.

In operation S2420, the first device 1000 searches for related content that is associated with the second user of the second device 2000 among a plurality of contents of the first user of the first device 1000. The first device 1000 may search for the related content that is associated with the first and second users among a plurality of contents stored in the first device 1000. Also, the first device 1000 may search for the related content that is associated with the first and second users among a plurality of contents stored in another device of the first user. Also, the first device 1000 may search for the related content that is associated with the first and second users among a plurality of contents stored in the SNS server 5000.

In operation S2430, the first device 1000 requests the content providing server 4000 to generate an object. When the first device 1000 requests the content providing server 4000 to generate the object, the first device 1000 may provide link information for downloading the related content found in operation 2420, and device information about the second device 2000 to the content providing server 4000.

In operation S2440, the content providing server 4000 generates the object. The content providing server 4000 may include, in the object, the link information that is received from the first device 1000. The content providing server 4000 may include, in the object, information for establishing a communication channel with the first device 1000.

In operation S2450, the content providing server 4000 provides the object to the second device 2000. The content providing server 4000 may transmit an object providing message to the second device 2000, and when an object request is received from the second device 2000, the content providing server 4000 may provide the object to the second device 2000.

In operation S2460, the second device 2000 downloads the found content by using the object. The second device 2000 may obtain the related content that is associated with the first and second users among the plurality of contents of the first user by using the link information included in the object.

When the related content that is associated with the first and second users is stored in the first device 1000, the second device 2000 may establish the communication channel with the first device 1000 and may receive the related content from the first device 1000. The second device 2000 may receive the related content from the first device 1000 via Wi-Fi communication, Bluetooth communication, or the like. In this case, the information for establishing the communication channel with the first device 1000 may be included in the object.

In operation S2470, the first device 1000 and the second device 2000 are distant from each other by at least a preset distance.

In operation S2480, the second device 2000 deletes the object. The second device 2000 may detect that the second device 2000 is distant from the first device 1000 by the at least a preset distance, and may delete the object received from the content providing server 4000 based on detection. In this case, the second device 2000 may receive location information about the first device 1000 from the first device 1000 or the content providing server 4000.

Also, the second device 20000 may delete a portion or all of a plurality of the related contents that are received via the object.

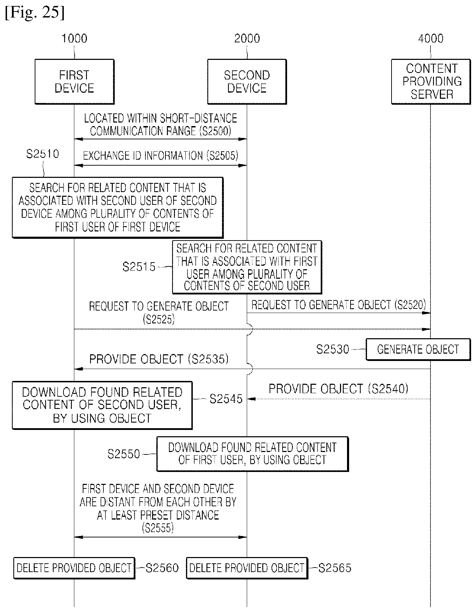

FIG. 25 is a flowchart of a method of recommending, to the first device 1000 and the second device 2000, content that is associated with a user of the first device 1000 and a user of the second device 2000 among a plurality of contents of the user of the first device 1000 and a plurality of contents of the user of the second device 1000, according to an exemplary embodiment.

In operation S2500, the first device 1000 is located within a short-distance communication range of the second device 2000. A first user may have the first device 1000 near the second device 2000, and thus may have the first device 1000 within the short-distance communication range of the second device 2000. A short-distance communication channel may be established between the first device 1000 and the second device 2000.

In operation S2505, the first device 1000 and the second device 2000 exchange ID information thereof. The first device 1000 may transmit the ID value of the first device 1000 to the second device 2000, and the second device 2000 may transmit the ID value of the second device 2000 to the first device 1000. Also, the first device 1000 may transmit user information about the first user of the first device 1000 to the second device 2000, and the second device 2000 may transmit user information about the second user of the second device 2000 to the first device 1000.

In operation S2510, the first device 1000 searches for related content that is associated with the second user of the second device 2000 among a plurality of contents of the first user of the first device 1000. The first device 1000 may search for the related content in at least one of the first device 1000, another device of the first user, the content providing server 4000, and the SNS server 5000.

In operation S2515, the second device 2000 searches for related content that is associated with the first user of the first device 1000 among a plurality of contents of the second user of the second device 2000. The second device 2000 may search for the related content in at least one of the second device 2000, another device of the second user, the content providing server 4000, and the SNS server 5000.

In operation 2520, the second device 2000 may request the content providing server 4000 to generate an object, and in operation S2525, the first device 1000 may request the content providing server 4000 to generate an object.

In operation S2530, the content providing server 4000 generates at least one object for providing the related content. The content providing server 4000 may include, in the object, at least one of the related content and link information for downloading the related content.

In operation S2535, the content providing server 4000 provides the object to the first device 1000, and in operation S2540, the content providing server 4000 provides the object to the second device 2000.

In operation S2545, the first device 1000 downloads the found related content of the second user via the object. The first device 1000 may download the found related content from the at least one of the second device 2000, the other device of the second user, the content providing server 4000, and the SNS server 5000.

When the searched related content is stored in the second device 2000, the first device 1000 may establish a communication channel with the second device 2000 and may receive the searched related content from the second device 2000 via Wi-Fi communication, Bluetooth communication, or the like. In this case, information for establishing the communication channel with the second device 2000 may be included in the object.

In operation S2550, the second device 2000 downloads the found related content of the first user via the object. The second device 2000 may download the found related content from the at least one of the first device 1000, the other device of the first user, the content providing server 4000, and the SNS server 5000.

When the found related content is stored in the first device 1000, the second device 2000 may establish a communication channel with the first device 1000 and may receive the found related content from the first device 1000 via Wi-Fi communication, Bluetooth communication, or the like. In this case, information for establishing the communication channel with the first device 1000 may be included in the object.

In operation S2555, the first device 1000 and the second device 2000 are distant from each other by at least a preset distance.

In operation S2560, the first device 1000 deletes the object. The first device 1000 may detect that the first device 1000 is distant from the second device 2000 by the at least a preset distance, and may delete the object received from the content providing server 4000 based on the detection. In this case, the first device 1000 may receive location information about the second device 2000 from the second device 2000 or the content providing server 4000. Also, the first device 1000 may delete a portion or all of a plurality of the related contents that are received via the object.

In operation S2565, the second device 2000 deletes the object. The second device 2000 may detect that the second device 2000 is distant from the first device 1000 by the at least a preset distance, and may delete the object received from the content providing server 4000 based on the detection. In this case, the second device 2000 may receive location information about the first device 1000 from the first device 1000 or the content providing server 4000. Also, the second device 20000 may delete a portion or all of a plurality of the related contents that are received via the object.

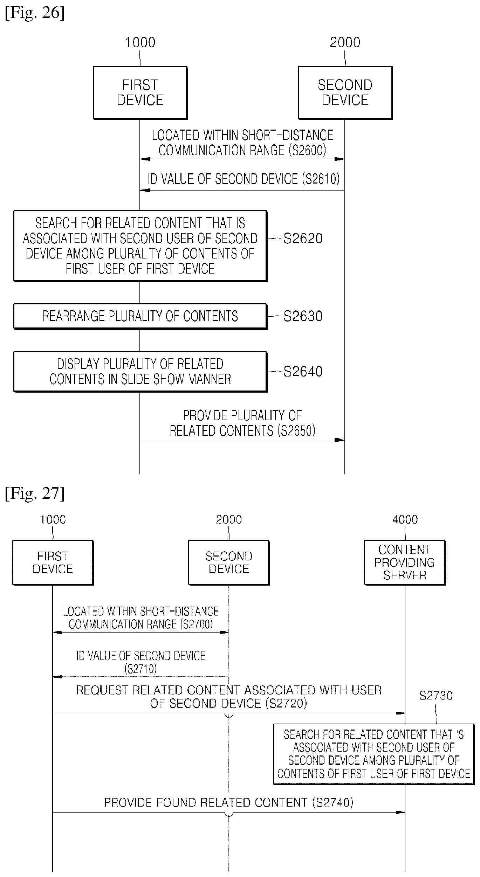

FIG. 26 is a flowchart of a method of rearranging a plurality of contents in the first device 1000, wherein the plurality of contents are associated with a user of the second device 2000 among a plurality of contents of a user of the first device 1000, according to an exemplary embodiment.

Operations S2600 through S2620 may correspond to operations S2400 through S2420 in the exemplary embodiment in FIG. 24, and thus descriptions about operations S2600 through S2620 are omitted here.

In operation S2630, the first device 1000 rearranges a plurality of contents. For example, when the plurality of contents are still images, the first device 1000 may rearrange the still images that are displayed on a gallery screen. The first device 1000 may arrange, on an upper portion of the gallery screen, the still images that are associated with first and second users among still images stored in the first device 1000.

In operation S2640, the first device 1000 may display a plurality of related contents in a slide-show manner. For example, when the plurality of related content are still images, the first device 1000 may display the plurality of related content that are found in operation S2620, on a screen of the first device 1000 in a slide-show manner.

In operation S2650, the first device 1000 provides the plurality of related contents to the second device 2000. The first device 1000 may transmit the plurality of related content to the second device 2000 via Wi-Fi communication, Bluetooth communication, or NFC communication, but exemplary embodiments are not limited thereto.

FIG. 27 is a flowchart of a method of receiving, from the content providing server 4000, content that is associated with a user of the second device 2000 among a plurality of contents of a user of the first device 1000, the method performed by the first device 1000, according to an exemplary embodiment.

In operation S2700, the first device 1000 is located within a short-distance communication range of the second device 2000. A first user may have the first device 1000 near the second device 2000, and thus may have the first device 1000 within the short-distance communication range of the second device 2000.

In operation S2710, the second device 2000 transmits the ID value of the second device 2000 to the first device 1000. When the first device 1000 is located within the short-distance communication range of the second device 2000, the first device 1000 and the second device 2000 may be connected to each other. The ID value of the second device 2000 may include, for example, a phone number, a model name, a serial number, etc. of the second device 2000.

In operation S2720, the first device 1000 request the content providing server 4000 for related content that is associated with a second user of the second device 2000 among a plurality of contents of a first user of the first device 1000.

In operation S2730, the content providing server 4000 searches for the related content that is associated with the second user of the second device 2000 among the plurality of contents of the first user of the first device 1000. The content providing server 4000 may search for the related content that is associated with the first and second users among a plurality of contents stored in the content providing server 4000. Also, the content providing server 4000 may search for the related content that is associated with the first and second users among a plurality of contents stored in another device of the first user. Also, the content providing server 4000 may search for the related content that is associated with the first and second users among a plurality of contents stored in the SNS server 5000.

In operation S2740, the content providing server 4000 provides the found related content to the first device 1000. The content providing server 4000 may provide link information for downloading the found related content, or data of the found related content to the first device 1000. The content providing server 4000 may provide an object for using the found related content to the first device 1000.

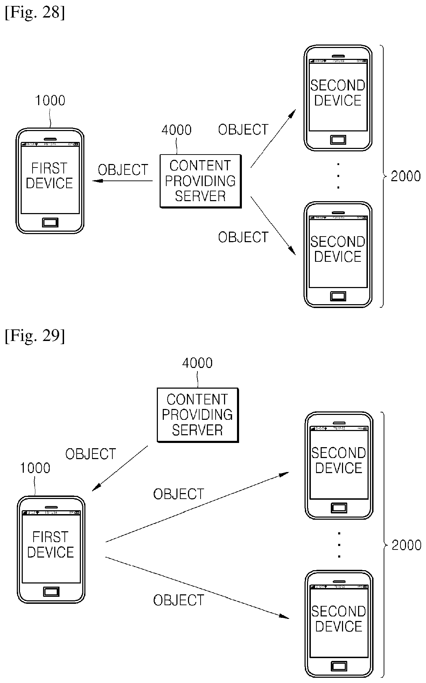

FIG. 28 illustrates an example in which the content providing server 4000 provides an object to the first device 1000 and the second device 2000 according to an exemplary embodiment.

Referring to FIG. 28, the content providing server 4000 may provide the object to the first device 1000 and the second device 2000 via a network (not shown). The object may include link information for downloading related content that is associated with the first user and the second user among a plurality of contents of the first user and a plurality of contents of the second user.

FIG. 29 illustrates an example in which the content providing server 4000 provides an object only to the first device 1000 according to an exemplary embodiment.

Referring to FIG. 29, the content providing server 4000 may provide the object only to the first device 1000 via a network (not shown), and the first device 1000 may transmit the object to the second device 2000. In this case, the object may include access information for accessing the second device 2000. The first device 1000 may establish a communication channel with the second device 2000 by using the access information, and may transmit the object to the second device 2000.

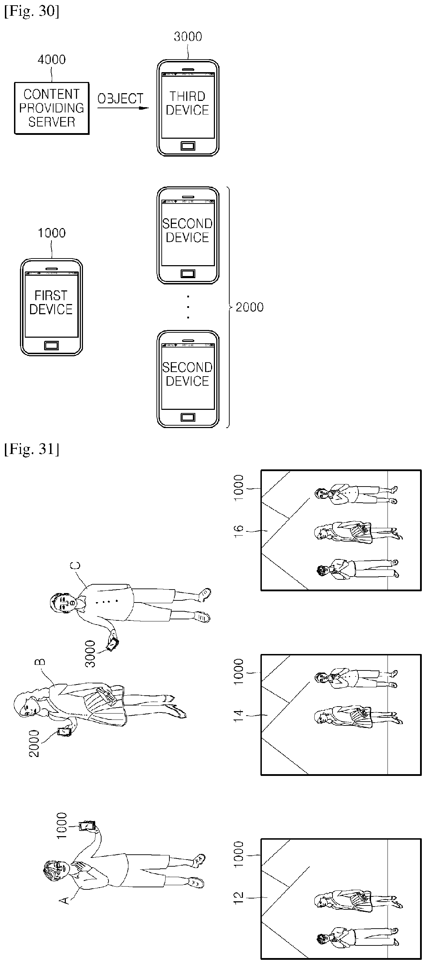

FIG. 30 illustrates an example in which the content providing server 4000 provides an object to the third device 3000 according to an exemplary embodiment.

Referring to FIG. 30, the content providing server 4000 may provide the object to the third device 3000 that is located near the first device 1000 and the second device 2000. For example, the third device 3000 may be a TV, PC, or a tablet PC of the first user or the second user, but exemplary embodiments are not limited thereto. For example, the third device 3000 may be a common-use display apparatus.

The content providing server 4000 may provide, to the first device 1000, device information of the third device 3000, and a notification message for determining whether to provide an object to the third device 3000. In this case, the first device 1000 may determine whether to provide the object to the third device 3000 based on the notification message, and may request the content providing server 4000 to provide the object to the third device 3000.

FIG. 31 illustrates an example in which found still images are filtered according to an exemplary embodiment.

As illustrated in FIG. 31, when the first device 1000 of a first user A is located near the second devices 2000 of second users B and C, the first device 1000 may search still images 12, 14, and 16 that are from among still images of the first user A and are associated with the second user B or the second user C. Also, the first device 1000 may select, from among the found still images 12, 14, and 16, the still image 16 that includes all of the first user A, the second user B, and the second user C. Alternatively, an object for providing the still image 16 may be transmitted from the content providing server 4000 to the first device 1000 and the second devices 2000.

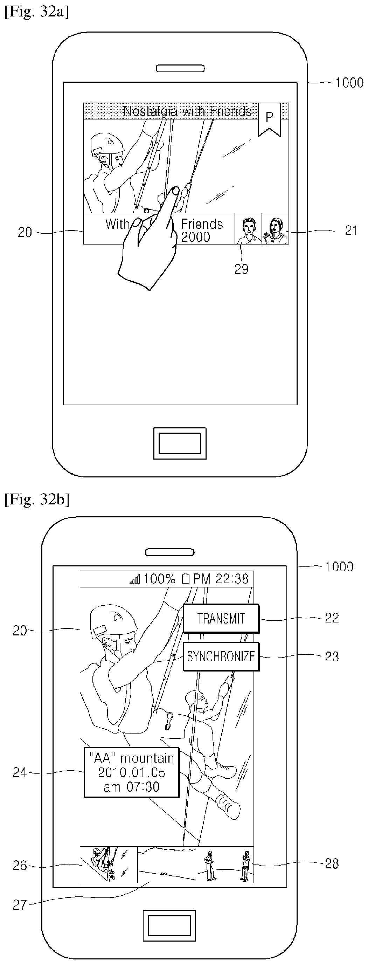

FIGS. 32A and 32B illustrate examples of an object 20 according to an exemplary embodiment.

As illustrated in FIG. 32A, the object 20 for displaying a still image associated with the first user and the second user may be displayed on a screen of the first device 1000. The object 20 may not be installed but may be displayed on the screen of the first device 1000. Also, the object 20 may include a face image 29 of the first user and a face image 21 of the second user.

When the first user touches an image that is displayed on the object 20, as illustrated in FIG. 32B, the touched image may be enlarged and displayed on the screen of the first device 1000. Also, at a lower portion of the object 20, still images 26, 27, and 28 that are associated with the first and second users may be displayed in a thumbnail manner.

The object 20 may include an icon 22 for transmitting the displayed image to the second device 2000. When the first user selects the icon 22, the image displayed on the object 20 may be transmitted to the second device 2000.

The object 20 may include an icon 23 for synchronizing the image displayed on the screen of the first device 1000 with an image (not shown) displayed on a screen of the second device 2000. When the first user selects the icon 23, the image of the first device 1000 that is displayed via the object 20 and the image of the second device 2000 that is displayed on the second device 2000 may be synchronized with each other.

Also, additional information 24 about the image that is displayed via the object 20 may be displayed. The additional information 24 may include, for example, a photographed location, a photographing date, and a photographing time about the image that is displayed via the object 20.

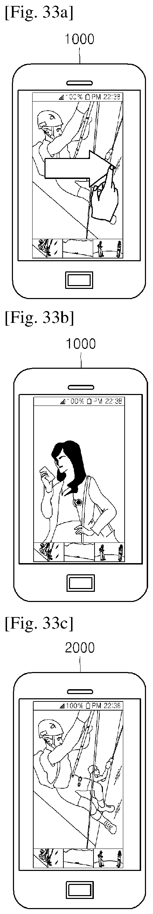

FIGS. 33A to 33D illustrate an example in which an object displayed on the first device 1000 is synchronized with an object displayed on the second device 2000 according to an exemplary embodiment.

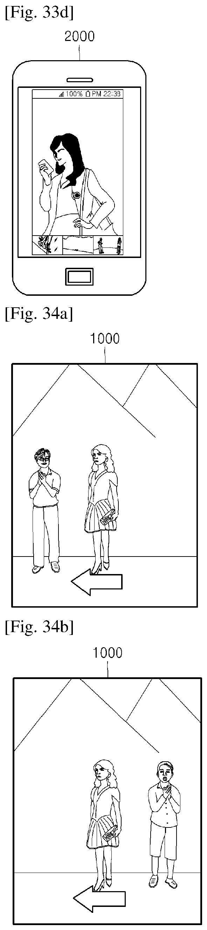

Referring to FIGS. 33A and 33C, a first image that is displayed on a screen of the first device 1000 via an object may be displayed on a screen of the second device 2000 via another object. Also, as illustrated in FIG. 33A, when a user touches and drags the first image that is displayed on the screen of the first device 1000 via the object, a second image may be displayed on the screen of the first device 1000, as illustrated in FIG. 33B. Accordingly, the second image that is displayed on the screen of the first device 1000 in FIG. 33B may also be displayed on the screen of the second device 2000, as shown in FIG. 33D.

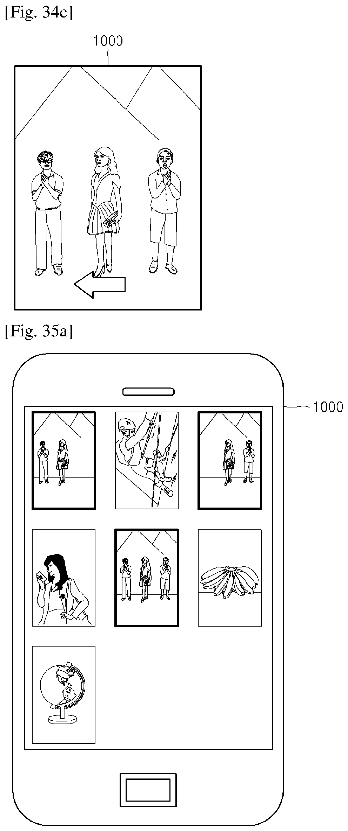

FIG. 34 illustrates an example in which still images that are associated with a first user and a second user are displayed in a slide show manner on the first device 1000 according to an exemplary embodiment.

Referring to FIGS. 34A through 34C, when a user touches and drags a screen of the first device 1000, the still images that are associated with the first and second users and are displayed on the screen of the first device 1000 via an object may be sequentially changed and displayed.

FIGS. 35A and 35B illustrate an example in which still images that are associated with a first user and a second user are rearranged on a gallery screen of the first device 1000.

Referring to FIG. 35A, various still images of the first user may be included in the gallery screen displayed on a screen of the first device 1000. When the second device 2000 is located near the first device 1000, the still images that are associated with the first and second users may be arranged and displayed on an upper portion of the gallery screen, as shown in FIG. 35B.

FIG. 36 is a block diagram of the content providing server 4000 according to an exemplary embodiment.

Referring to FIG. 36, the content providing server 4000 includes a device searcher 4100, a content searcher 4200, an object generator 4300, a content provider 4400, a communicator 4500, the DB 4600, and a controller 4700.

The device searcher 4100 searches for the second device 2000 that is located near the first device 1000. The device searcher 4100 may search for the second device 2000 located near the first device 1000 based on location information about the first device 1000 that is received from the first device 1000 and location information about the second device 2000 that is received from the second device 2000. Alternatively, the device searcher 4100 may search for the second device 2000 based on location information of the location information providing apparatus 7000 received from at least one of the first device 1000 and the second device 2000. The location information provided from the location information providing apparatus 7000 may include, but is not limited to, a GPS value, an ID value of an AP, and an ID value of the location information providing apparatus 7000.

When a short-distance communication channel is established between the first device 1000 and the second device 2000, the first device 1000 may recognize that the second device 2000 is located near the first device 1000. In this case, the first device 1000 may provide ID values of the first device 1000 and the second device 2000 to the content providing server 4000, and the device searcher 4100 may recognize that the second device 2000 is located near the first device 1000.

The device searcher 4100 may filter the found second devices 2000 based on a preset reference. For example, the device searcher 4100 may filter the found second devices 2000, in consideration of a location of the first device 1000, a schedule of the first user, a time, weather, etc.

Also, the device searcher 4100 may determine whether the second user of the second device 2000 is related to the first user of the first device 1000.

The content searcher 4200 searches for related content that is associated with the first user and the second user. The content searcher 4200 may search for the related content associated with the first and second users, from among a plurality of contents of the first user. The content searcher 4200 may search for the related content associated with the first and second users, from among a plurality of contents of the second user.

The content of the first user may be stored in at least one of the first device 1000, another device of the first user, the content providing server 4000, and the SNS server 5000. The content of the second user may be stored in at least one of the second device 2000, another device of the second user, the content providing server 4000, and the SNS server 5000.

The content searcher 4200 may search for the related content associated with the first and second users, by using at least one of device information about the first device 1000, user information about the first user, device information about the second device 2000, and user information about the second user.

The content searcher 4200 may filter a plurality of found related contents, according to a preset reference. The preset reference with respect to filtering the plurality of found related content may vary depending on, for example, a location of the first device 1000, a relation between the first user and the second user, the number of second devices 2000 located near the first device 1000, a type of the third device 3000 located near the first device 1000, or the number of acquaintances related to the content. When a plurality of second devices 2000 are located near the first device 1000, the content searcher 4200 may extract content that is associated with a preset number of users from among the first user and a plurality of second users of the plurality of the second devices 2000.

The object generator 4300 generates an object for providing the related content. The object generator 4300 may obtain a template that is matched with a type of the related content and may insert link information for downloading the related content into the template. Also, the object generator 4300 may insert a reason for recommending the object, a face image of the first user, and a face image of the second user into the template. Also, the object generator 4300 may insert a title of the object and activity information about using the object into the template.

The content provider 4400 provides the object to the first device 1000 and the second device 2000. The content provider 4400 may provide the object to the first device 1000, and the first device 1000 may provide the object to the second device 2000. Also, the content provider 4400 may provide the object to the third device 3000 that is located within a preset distance from the first device 1000 and the second device 2000.

The content provider 4400 may provide a notification message to at least one of the first device 1000, the second device 2000, and the third device 3000 to notify that the object is to be provided. In response to an object request from at least one of the first device 1000, the second device 2000, and the third device 3000, the content provider 4400 may transmit the object to at least one of the first device 1000, the second device 2000, and the third device 3000.

The communicator 4500 exchanges information used in generating and providing the object, and the object with the first device 1000, the second device 2000, and the third device 3000.

The DB 4600 stores the information that is used in generating and providing the object.

The controller 4700 controls operations by the content providing server 4000. Also, to control the content providing server 4000 to share related content with the second device 2000 and the third device 3000 which is located near the first device 1000, the controller 4700 controls the device searcher 4100, the content searcher 4200, the object generator 4300, the content provider 4400, the communicator 4500, and the DB 4600.

Here, the controller 4700 may include one or more hardware and/or software components. For example, the controller 4700 may include one or more of an integrated circuitry, a dedicated circuit, firmware, and/or a processor such as a central processing unit (CPU) which executes software programs stored in a storage, e.g., a memory.

FIG. 37 is a block diagram of the DB 4600 according to an exemplary embodiment.

As illustrated in FIG. 37, the DB 4600 includes a device information DB 4610, a user information DB 4620, a content information DB 4630, a template information DB 4640, and an object information DB 4650.

The device information DB 4610 stores a plurality of pieces of device information about the first device 1000, the second device 2000, another device of a first user, and another device of a second user. The device information may include ID information and access information. The ID information may include a model name, a serial number, a phone number, etc. of each device. The access information may be used to establish a communication channel with each device.

The user information DB 4620 stores user information about each of the first and second users. The user information includes a service ID of the content providing server 4000, and an SNS service ID of the SNS server 5000.

The content information DB 4630 stores content of the first user and content of the second user. The content information DB 4630 stores a plurality of pieces of information about the content of the first user and the content of the second user. The content information DB 4630 may store, from among content that is stored in the content providing server 4000 by the first user, content that is stored in the content providing server 4000 by the second user, and content that is provided by the content providing server 4000, content that is usable by the first user and content that is usable by the second user.

The content information DB 4630 may store link information for downloading the content of the first user and link information for downloading the content of the second user. The content information DB 4630 may store link information for downloading content that is stored in the other device of the first user, link information for downloading content that is stored in the other device of the second user, link information for downloading content of the first user that is stored in the SNS server 5000, and link information for downloading content of the second user that is stored in the SNS server 5000.

The template information DB 4640 stores templates and various types of information about the templates. The templates may be distinguished therebetween according to, for example, a type of the first device 1000, a type of the second device 2000, a type of content, the SNS server 5000, and a user.

The object information DB 4650 stores objects and information about the objects to be provided to the first device 1000 and the second device 2000.

FIG. 38 is a block diagram of the first device 1000 according to an exemplary embodiment.

As illustrated in FIG. 38, the first device 1000 includes a communicator 1100, an inputter 1200, a memory 1300, and a controller 1400.

The communicator 1100 exchanges information for searching for related content and generating an object with the content providing server 4000, the second device 2000, and the third device 3000. Also, the communicator 1100 may establish a communication channel with an AP connected with at least one of the first device 1000, the second device 2000, and the third device 3000.

The inputter 1200 receives a user input with respect to the first device 1000. The inputter 1200 may receive the user input via an inputter such as a touch screen (not shown), a keypad (not shown), or the like of the first device 1000.

The memory 1300 stores the information for searching for the related content and generating the object. The memory 1300 may store device information about the first device, user information about the first user, content of the first user, or the like.

The controller 1400 controls operations by the first device 1000. When the second device 2000 is located near the first device 1000, the controller 1400 may display related content that is associated with the first user and the second user, on a screen of the first device 1000.

The controller 1400 may provide location information about the first device and the user information about the first user to the content providing server 4000 and may receive an object from the content providing server 4000. Also, the controller 1400 may transmit the object to the second device 2000 and the third device 3000.

When the first device 1000 is located within a communication range of the second device 2000, the controller 1400 may receive device information about the second device 2000 and user information about the second user from the second device 2000. Also, the controller 1400 may provide the device information about the second device 2000 and the user information about the second user to the content providing server 4000.

The controller 1400 may search for the related content that is associated with the first and second users, from among a plurality of contents stored in at least one of the first device 1000, another device of the first user, and the SNS server 5000. Also, the controller 1400 may provide link information for downloading the related content to the content providing server 4000.

The controller 1400 may display the related content that is associated with the first and second users on the screen of the first device 1000 via the object. Also, the controller 1400 may rearrange a plurality of contents displayed on a gallery screen and may dispose the related content on an upper portion of the gallery.

The exemplary embodiments may be embodied as computer-readable code and/or instructions on a computer-readable recording medium, e.g., a program module to be executed in computers, which include computer-readable commands. The computer-readable recording medium may include any usable medium that may be accessed by computers, volatile and non-volatile medium, and detachable and non-detachable medium. Examples of the computer-readable recording medium may include a read-only memory (ROM), a random-access memory (RAM), a compact disc (CD)-ROM, a magnetic tape, a floppy disk, an optical data storage device, etc. Also, the computer-readable recording medium may include a computer storage medium and a communication medium. The computer storage medium includes all volatile and non-volatile media, and detachable and non-detachable media which are designed to store information including computer-readable commands, data structures, program modules or other data. The communication medium includes computer-readable commands, a data structure, a program module, and other transmission mechanisms, and includes other information transmission mediums.

It should be understood that the exemplary embodiments described herein should be considered in a descriptive sense only and not for purposes of limitation. Descriptions of features or aspects within each embodiment should typically be considered as available for other similar features or aspects in other embodiments. For example, configuring elements that are singular forms may be executed in a distributed fashion, and also, configuring elements that are distributed may be combined and then executed.

While a few embodiments have been particularly shown and described, it will be understood by those of ordinary skill in the art that various changes in form and details may be made therein without departing from the scope of the disclosure as defined by the following claims.

## Claims

1. An apparatus (1000) of a first user, the apparatus (1000) comprising:
a communicator (1100) configured to, when an external device (2000) of a second user is located within a predetermined distance from the apparatus (1000), receive identification, ID, information of the external device (2000) from the external device (2000) and transmit the received ID information of the external device (2000) to a content providing server (4000); and **characterized by**
a controller (1400) configured to request the content providing server (4000) for content including both an image of the first user and an image of the second user in at least one from among content stored in another apparatus of the first user, content stored by the first user at the content providing server (4000), and content uploaded by the first user to a social networking service, SNS, server (5000), based on ID information of the apparatus and the received ID information of the external device (2000);
wherein the communicator (1100) receives the content including the image of the first user and the image of the second user from the content providing server (4000) in response to the request.

2. The apparatus of claim 1, wherein the communicator (1100) receives, when the apparatus (1000) is located within a near-field communication range of the external device (2000), the ID information of the external device (2000) from the external device (2000).

3. The apparatus of claim 1, wherein the controller (1400), based on whether the external device (2000) is associated with the apparatus (1000), filters the external device (2000), and provides ID information of the filtered external device to the content providing server (4000) through the communicator (1100).

4. The apparatus of claim 3, wherein the controller (1400) provides an SNS service ID of the first user to the SNS server (5000) through the communicator (1100), and filters the external device (2000) based on relationship information of the first user, the relationship information being received from the SNS server (5000).

5. The apparatus of claim 4, wherein the relationship information comprises a social graph associated with a relationship between the first user and other users.

6. The apparatus of claim 3, wherein the controller (1400) provides an SNS ID of the first user and an SNS service ID of the second user to the content providing server (4000), and
based on the SNS ID of the first user and the SNS service ID of the second user, the content providing server (4000) determines whether the external device is associated with the apparatus.

7. The apparatus of claim 1, wherein the controller (1400) receives an object for accessing the content associated with the first user and the second user from the content providing server (4000) through the communicator (1100).

8. The apparatus of claim 7, wherein the object comprises link information for downloading the content associated with the first user and the second user.

9. The apparatus of claim 7, wherein the object comprises a user interface including at least one from among an icon, a text, an image, the link information, and information about functions of the object.

10. The apparatus of claim 1, wherein the content associated with the first user and the second user comprises, from among pictures of the first user, a picture including a face of the first user and a face of the second user.

11. The apparatus of claim 1, wherein the content associated with the first user and the second user is filtered and transmitted by the content providing server (4000).

12. The apparatus of claim 1, wherein, from among the content of the first user, the content associated with the first user and the second user is provided to the external device (2000).

13. A method of receiving content by an apparatus (1000) of a first user, the method comprising;
when an external device (2000) of a second user is located (S2700) within a predetermined distance from the apparatus (1000), receiving (S2710) ID information of the external device (2000) from the external device (2000); and **characterized by**
requesting (S2720), based on the received ID information of the external device (2000) and ID information of the apparatus, a content providing server (4000) for content including an image of the first user and an image of the second user in at least one from among content stored in another apparatus of the first user, content stored by the first user at the content providing server (4000), and content uploaded by the first user to a social networking service, SNS, server (5000); and
receiving (S2740) the content including the image of the first user and the image of the second user from the content providing server (4000) according to the request.

14. A computer-readable recording medium having recorded thereon a program for executing the method of claim 13.

## Patentansprüche

1. Gerät (1000) eines ersten Benutzers, das Gerät (1000) umfassend:
einen Kommunikator (1100), der konfiguriert ist, um, wenn sich eine externe Vorrichtung (2000) eines zweiten Benutzers innerhalb eines vorbestimmten Abstands von dem Gerät (1000) befindet, Identifizierungsinformationen, ID-Informationen, der externen Vorrichtung (2000) von der externen Vorrichtung (2000) zu empfangen und die empfangenen ID-Informationen der externen Vorrichtung (2000) an einen Inhalt-bereitstellenden Server (4000) sendet; und **gekennzeichnet durch**
eine Steuerung (1400), die konfiguriert ist, bei dem Inhalt-bereitstellenden Server (4000) Inhalt anzufordern, der sowohl ein Bild des ersten Benutzers als auch ein Bild des zweiten Benutzers in mindestens einem von Inhalten, die in einem anderen Gerät des ersten Benutzers gespeichert sind, von Inhalten, die von dem ersten Benutzer auf dem Inhalt-bereitstellenden Server (4000) gespeichert sind, und von Inhalten, die von dem ersten Benutzer auf einen sozialen Netzwerkdienst-Server (SNS-Server) (5000) hochgeladen wurden, beinhaltet, basierend auf ID-Informationen des Geräts und den empfangenen ID-Informationen der externen Vorrichtung (2000);
wobei der Kommunikator (1100) den Inhalt, der das Bild des ersten Benutzers und das Bild des zweiten Benutzers beinhaltet, als Reaktion auf die Anforderung von dem Inhalt-bereitstellenden Server (4000) empfängt.

2. Vorrichtung nach Anspruch 1, wobei der Kommunikator (1100), wenn sich das Gerät (1000) innerhalb eines Nahfeld-Kommunikationsbereichs der externen Vorrichtung (2000) befindet, die ID-Information der externen Vorrichtung (2000) von der externen Vorrichtung (2000) empfängt.

3. Vorrichtung nach Anspruch 1, wobei die Steuerung (1400) basierend darauf, ob die externe Vorrichtung (2000) mit dem Gerät (1000) assoziiert ist, die externe Vorrichtung (2000) filtert und ID-Informationen der gefilterten externen Vorrichtung über den Kommunikator (1100) an den Inhalt-bereitstellenden Server (4000) bereitstellt.

4. Vorrichtung nach Anspruch 3, wobei die Steuerung (1400) dem SNS-Server (5000) über den Kommunikator (1100) eine SNS-Dienst-ID des ersten Benutzers bereitstellt und die externe Vorrichtung (2000) basierend auf Beziehungsinformationen des ersten Benutzers filtert, wobei die Beziehungsinformationen von dem SNS-Server (5000) empfangen werden.

5. Vorrichtung nach Anspruch 4, wobei die Beziehungsinformationen einen sozialen Graphen umfassen, der mit einer Beziehung zwischen dem ersten Benutzer und anderen Benutzern assoziiert ist.

6. Vorrichtung nach Anspruch 3, wobei die Steuerung (1400) eine SNS-ID des ersten Benutzers und eine SNS-Service-ID des zweiten Benutzers an den Inhalt-bereitstellenden Server (4000) bereitstellt, und
der Inhalt-bereitstellende Server (4000) basierend auf der SNS-ID des ersten Benutzers und der SNS-Service-ID des zweiten Benutzers bestimmt, ob die externe Vorrichtung mit dem Gerät assoziiert ist.

7. Vorrichtung nach Anspruch 1, wobei die Steuerung (1400) ein Objekt für einen Zugang zu dem Inhalt, der mit dem ersten Benutzer und dem zweiten Benutzer assoziiert ist, über den Kommunikator (1100) von dem Inhalt-bereitstellenden Server (4000) empfängt.

8. Vorrichtung nach Anspruch 7, wobei das Objekt Link-Informationen zum Herunterladen des Inhalts umfasst, der mit dem ersten Benutzer und dem zweiten Benutzer assoziiert ist.

9. Vorrichtung nach Anspruch 7, wobei das Objekt eine Benutzerschnittstelle umfasst, die mindestens eines von einem Symbol, einem Text, einem Bild, den Link-Informationen und Informationen über Funktionen des Objekts beinhaltet.

10. Vorrichtung nach Anspruch 1, wobei der Inhalt, der mit dem ersten Benutzer und dem zweiten Benutzer assoziiert ist, unter Bildern des ersten Benutzers ein Bild umfasst, das ein Gesicht des ersten Benutzers und ein Gesicht des zweiten Benutzers beinhaltet.

11. Vorrichtung nach Anspruch 1, wobei der Inhalt, der mit dem ersten Benutzer und dem zweiten Benutzer assoziiert ist, durch den Inhalt-bereitstellenden Server (4000) gefiltert und gesendet wird.

12. Vorrichtung nach Anspruch 1, wobei unter dem Inhalt des ersten Benutzers der Inhalt, der mit dem ersten Benutzer und dem zweiten Benutzer assoziiert ist, der externen Vorrichtung (2000) bereitgestellt wird.

13. Verfahren zum Empfangen von Inhalt durch ein Gerät (1000) eines ersten Benutzers, das Verfahren umfassend;
wenn sich eine externe Vorrichtung (2000) eines zweiten Benutzers innerhalb eines vorbestimmten Abstands von dem Gerät (1000) befindet (S2700), Empfangen (S2710) von ID-Informationen der externen Vorrichtung (2000) von der externen Vorrichtung (2000); und **gekennzeichnet durch**
Anfordern (S2720), basierend auf den empfangenen ID-Informationen der externen Vorrichtung (2000) und den ID-Informationen des Geräts, eines Inhalt-bereitstellenden Servers (4000) von Inhalt, der ein Bild des ersten Benutzers und ein Bild des zweiten Benutzers beinhaltet, in mindestens einem von Inhalten, die in einem anderen Gerät des ersten Benutzers gespeichert sind, von Inhalten, die von dem ersten Benutzer bei dem Inhalt-bereitstellenden Server (4000) gespeichert sind, und von Inhalten, die von dem ersten Benutzer auf einen sozialen Netzwerkdienst-Server (SNS-Server) (5000) hochgeladen wurden; und
Empfangen (S2740) des Inhalts, der das Bild des ersten Benutzers und das Bild des zweiten Benutzers beinhaltet, von dem Inhalt-bereitstellenden Server (4000), gemäß der Anforderung.

14. Computerlesbares Aufzeichnungsmedium, auf dem ein Programm zum Ausführen des Verfahrens nach Anspruch 13 aufgezeichnet ist.

## Revendications

1. Appareil (1000) d'un premier utilisateur, l'appareil (1000) comprenant :
un dispositif de communication (1100) configuré pour, lorsqu'un dispositif externe (2000) d'un second utilisateur est situé dans les limites d'une distance prédéfinie de l'appareil (1000), recevoir les informations d'identification, ID, du dispositif externe (2000) en provenance du dispositif externe (2000) et émettre des informations ID reçues du dispositif externe (2000) vers un serveur fournissant du contenu (4000) ; et **caractérisé par**
un dispositif de commande (1400) configuré pour demander au serveur fournissant du contenu (4000) un contenu comprenant à la fois une image du premier utilisateur et une image du second utilisateur dans au moins un parmi un contenu stocké dans un autre appareil du premier utilisateur, un contenu stocké par le premier utilisateur au niveau du serveur fournissant du contenu (4000), et un contenu téléchargé en amont par le premier utilisateur vers un serveur de service de réseautage social, SNS, (5000), sur la base des informations ID de l'appareil et des informations ID reçues du dispositif externe (2000) ;
ledit dispositif de communication (1100) recevant le contenu comprenant l'image du premier utilisateur et l'image du second utilisateur en provenance du serveur fournissant du contenu (4000) en réponse à la demande.

2. Appareil selon la revendication 1, ledit dispositif de communication (1100) recevant, lorsque l'appareil (1000) est situé à portée d'une communication en champ proche du dispositif externe (2000), les informations ID du dispositif externe (2000) en provenance du dispositif externe (2000).

3. Appareil selon la revendication 1, ledit dispositif de commande (1400), sur la base de l'association, ou non, du dispositif externe (2000) à l'appareil (1000), filtrant le dispositif externe (2000) et fournissant des informations ID du dispositif externe filtré au serveur fournissant du contenu (4000) par l'intermédiaire du dispositif de communication (1100).

4. Appareil selon la revendication 3, ledit dispositif de commande (1400) fournissant un ID de service SNS du premier utilisateur au serveur SNS (5000) par l'intermédiaire du dispositif de communication (1100), et filtrant le dispositif externe (2000) sur la base des informations de relation du premier utilisateur, les informations de relation étant reçues en provenance du serveur SNS (5000).

5. Appareil selon la revendication 4, lesdites informations de relation comprenant un graphe social associé à une relation entre le premier utilisateur et d'autres utilisateurs.

6. Appareil selon la revendication 3, ledit dispositif de commande (1400) fournissant un ID SNS du premier utilisateur et un ID de service SNS du second utilisateur au serveur fournissant du contenu (4000), et sur la base de l'ID SNS du premier utilisateur et de l'ID de service SNS du second utilisateur, le serveur fournissant du contenu (4000) déterminant si le dispositif externe est associé à l'appareil.

7. Appareil selon la revendication 1, ledit dispositif de commande (1400) recevant un objet pour accéder au contenu associé au premier utilisateur et au second utilisateur à partir du serveur fournissant du contenu (4000) par l'intermédiaire du dispositif de communication (1100).

8. Appareil selon la revendication 7, ledit objet comprenant des informations de lien permettant de télécharger en aval le contenu associé au premier utilisateur et au second utilisateur.

9. Appareil selon la revendication 7, ledit objet comprenant une interface utilisateur comprenant au moins un parmi une icône, un texte, une image, les informations de lien et des informations concernant les fonctions de l'objet.

10. Appareil selon la revendication 1, ledit contenu associé au premier utilisateur et au second utilisateur comprenant, parmi les images du premier utilisateur, une image comprenant un visage du premier utilisateur et un visage du second utilisateur.

11. Appareil selon la revendication 1, ledit contenu associé au premier utilisateur et au second utilisateur étant filtré et émis par le serveur fournissant du contenu (4000).

12. Appareil selon la revendication 1, parmi le contenu du premier utilisateur, ledit contenu associé au premier utilisateur et au second utilisateur étant fourni au dispositif externe (2000).

13. Procédé de réception de contenu par un appareil (1000) d'un premier utilisateur, le procédé comprenant ;
lorsqu'un dispositif externe (2000) d'un second utilisateur est situé (S2700) dans les limites d'une distance prédéfinie de l'appareil (1000), la réception (S2710) des informations ID du dispositif externe (2000) en provenance du dispositif externe (2000) ; et **caractérisé par** la demande (S2720), sur la base des informations ID reçues du dispositif externe (2000) et des informations ID de l'appareil, à un serveur fournissant du contenu (4000) un contenu comprenant une image du premier utilisateur et une image du second utilisateur dans au moins un parmi le contenu stocké dans un autre appareil du premier utilisateur, un contenu stocké par le premier utilisateur au niveau du serveur fournissant du contenu (4000) et un contenu téléchargé en amont par le premier utilisateur vers un serveur de service de réseautage social, SNS, (5000) ; et
la réception (S2740) du contenu comprenant l'image du premier utilisateur et l'image du second utilisateur en provenance du serveur fournissant du contenu (4000) selon la demande.

14. Support d'enregistrement lisible par ordinateur sur lequel est enregistré un programme destiné à exécuter le procédé selon la revendication 13.
